# EUROPÄISCHE PATENTSCHRIFT

(11) **EP 3 724 609 B1**
(45) Veröffentlichungstag und Bekanntmachung des Hinweises auf die Patenterteilung: **10.11.2021**
(21) Anmeldenummer: 18836805.4
(22) Anmeldetag: 19.12.2018
(51) Int. Cl.: G01D 5/245

(54) **LINEARE WEGMESSVORRICHTUNG ZUM BESTIMMEN EINER ABSOLUTEN POSITION UND LINEARFÜHRUNG MIT EINER DERARTIGEN WEGMESSVORRICHTUNG**
LINEAR MEASUREMENT DEVICE FOR DETERMINING AN ABSOLUTE POSITION AND LINEAR GUIDANCE WITH SUCH A MEASUREMENT DEVICE
DISPOSITIF DE MESURE LINÉAIRE POUR DÉTERMINER UNE POSITION ABSOLUE ET GUIDAGE LINÉAIRE AVEC UN TEL DISPOSITIF DE MESURE

(30) Priorität: 22.12.2017 DE 202017107880 U; 03.01.2018 CN 201820011057 U
(43) Veröffentlichungstag der Anmeldung: 21.10.2020
(73) Patentinhaber: Schneeberger Holding AG, 4914 Roggwil (CH)
(72) Erfinder: GÖTZ, Klaus-Dieter, 74372 Sersheim (DE)
(74) Vertreter: EGLI-EUROPEAN PATENT ATTORNEYS
(86) Internationale Anmeldenummer: PCT/CH2018/000052
(87) Internationale Veröffentlichungsnummer: WO 2019/119162

(56) Entgegenhaltungen:
- EP-A1- 0 171 383
- DE-A1- 3 509 838
- JP-A- 2003 222 512
- JP-A- 2006 098 139

## Beschreibung

### Technisches Gebiet

Die Erfindung bezieht sich auf eine lineare Wegmessvorrichtung zum Bestimmen einer absoluten Position und eine Linearführung in Kombination mit einer linearen Wegmessvorrichtung zum Bestimmen einer absoluten Position.

### Stand der Technik

Zahlreiche bekannte Anwendungen auf verschiedenen Gebieten der Technik beruhen auf Linearführungen, welche dazu dienen, zumindest einen bewegbaren Körper bei einer linearen Bewegung in einer Richtung zu führen, und welche zu diesem Zweck in der Regel eine lineare Schiene aufweisen, an welcher der bewegbare Körper derart geführt ist, dass er eine lineare Bewegung in Richtung der Längsachse der Schiene ausführen kann. Die Längen von Schienen, welche in einem Stück gefertigt und für Linearführungen geeignet sein sollen, sind in der Regel aus herstellungstechnischen Gründen limitiert: Mit bekannten Herstellungstechniken sind in der Regel nur lineare Schienen mit der erforderlichen Präzision in einem Stück herstellbar, deren Längen eine bestimmte maximale (gegebenenfalls vom jeweiligen Herstellungsverfahren abhängige) Obergrenze nicht überschreiten.

Um eine lineare Führung eines bewegbaren Körpers über eine "beliebig" lange Distanz zu ermöglichen, wurden Linearführungen vorgeschlagen, welche zur Führung des bewegbaren Körpers eine lineare Schiene aufweisen, welche aus mehreren einzelnen Schienensegmenten zusammengesetzt ist, die jeweils in einem Stück gefertigt und in Richtung der Längsachse der linearen Schiene hintereinander angeordnet sind. Da die Anzahl der Schienensegmente, welche in einer vorgegebenen Richtung hintereinander angeordnet werden können, nicht limitiert ist, scheint es grundsätzlich möglich zu sein, eine hinreichend grosse Anzahl von einstückigen Schienensegmenten mit vorgegebenen (endlichen) Längen zu einer linearen Schiene zusammenzusetzen, welche eine beliebig grosse Länge aufweisen kann.

Bei vielen bekannten Anwendungen von Linearführungen besteht ein Interesse daran, die aktuelle Position eines bewegbaren Körpers relativ zu der linearen Schiene, an welcher der bewegbare Körper geführt ist, messtechnisch zu erfassen, um die aktuelle Position des bewegbaren Körpers oder eine Veränderung der Position des bewegbaren Körpers bei einer Bewegung des Körpers in der Längsrichtung der Schiene anhand von Messwerten möglichst präzise kontrollieren zu können. Dementsprechend wurden geeignete lineare Wegmessvorrichtungen vorgeschlagen, welche eine messtechnische Erfassung einer aktuellen Position des bewegbaren Körpers oder eine messtechnische Erfassung einer Veränderung der Position des bewegbaren Körpers bei einer Bewegung des Körpers in der Längsrichtung der Schiene ermöglichen.

Lineare Wegmessvorrichtungen umfassen in der Regel eine oder mehrere Massverkörperungen, welche jeweils eine Mehrzahl von Positionsmarkierungen aufweisen, und eine entlang der Massverkörperung bzw. der Massverkörperungen bewegbare Abtasteinrichtung mit einer Sensoranordnung zum Abtasten der Positionsmarkierungen der jeweiligen Massverkörperung bzw. Massverkörperungen. Die Sensoranordnung ist dabei in der Regel so konzipiert, dass sie die jeweiligen Positionsmarkierungen detektieren kann und mindestens ein Signal erzeugt, welches eine Information über eine Position der Sensoranordnung relativ zu den Positionsmarkierungen einer Massverkörperung enthält und insbesondere auf eine charakteristische Weise variiert, wenn die Abtasteinrichtung zusammen mit der Sensoranordnung relativ zu der Massverkörperung bzw. zu den Positionsmarkierungen der Massverkörperung bewegt wird.

Um im Falle einer Linearführung, welche zur Führung eines bewegbaren Körpers eine lineare Schiene aufweist, eine messtechnische Erfassung einer aktuellen Position des bewegbaren Körpers oder eine messtechnische Erfassung einer Veränderung der Position des bewegbaren Körpers bei einer Bewegung des Körpers in der Längsrichtung der Schiene zu ermöglichen, kann die Linearführung mit einer linearen Wegmessvorrichtung der vorstehend genannten Art kombiniert werden. Beispielsweise kann die lineare Schiene der Linearführung mit mindestens einer Massverkörperung versehen werden, vorzugsweise mit einer Massverkörperung, welche sich in der Längsrichtung der linearen Schiene erstreckt und deren Positionsmarkierungen entlang der Längsachse der linearen Schiene hintereinander angeordnet sind. Demensprechend kann die Abtasteinrichtung der linearen Wegmessvorrichtung derart am bewegbaren Körper befestigt werden, dass die Abtasteinrichtung bei einer Bewegung des bewegbaren Körpers entlang der linearen Schiene mit dem bewegbaren Körper mitbewegt wird und die Abtasteinrichtung die Positionsmarkierungen mittels der Sensoranordnung abtasten kann.

Bei einer Linearführung, deren lineare Schiene aus mehreren einzelnen Schienensegmenten zusammengesetzt ist, ist es zweckmässig, jedes der Schienensegmente mit zumindest einer Massverkörperung der vorstehend genannten Art zu versehen. Die jeweiligen Massverkörperungen der einzelnen Schienensegmente sind dabei vorzugsweise derart anzuordnen, dass Positionsmarkierungen aller Massverkörperungen mittels der Sensoranordnung der Abtasteinrichtung abgetastet werden können, wenn der bewegbare Körper entlang der einzelnen Schienensegmente bewegt wird.

In bekannten linearen Wegmessvorrichtungen werden in der Regel Massverkörperungen verwendet, welche entweder eine inkrementelle Kodierung von verschiedenen Positionen oder eine Kodierung von verschiedenen absoluten Positionen (auch "absolute Kodierung" genannt) aufweisen. Bekannt sind auch Massverkörperungen, welche eine inkrementelle Kodierung von verschiedenen Positionen und zusätzlich eine absolute Kodierungen von einzelnen Positionen (sogenannten "Referenzpositionen") umfassen.

Eine Massverkörperung mit einer inkrementellen Kodierung weist in der Regel eine sich in einer Längsrichtung der Massverkörperung erstreckende Inkrementalspur mit einer Mehrzahl von äquidistant angeordneten Positionsmarkierungen auf. Werden die Positionsmarkierungen einer derartigen Inkrementalspur mit einer in der Längsrichtung der Inkrementalspur bewegten Sensoranordnung einer Abtasteinrichtung abgetastet, dann erzeugt die Sensoranordnung in der Regel ein Signal, das eine periodische Variation als Funktion einer Ortskoordinate zeigt, welche die Position der Sensoranordnung kennzeichnet und sich dementsprechend bei einer Bewegung der Abtasteinrichtung in der Längsrichtung der Inkrementalspur verändert.

Die periodische Variation des Signals als Funktion der Ortskoordinate bei einer Bewegung der Abtasteinrichtung in der Längsrichtung der Inkrementalspur ist in diesem Fall dadurch bedingt, dass Positionsmarkierungen an Positionen ausgebildet sind, welche in gleichen Abständen (äquidistant) in einer Reihe hintereinander angeordnet sind. Eine Auswertung des Signals ermöglicht dementsprechend eine präzise Erfassung einer relativen Veränderung der Position der Abtasteinrichtung bei einer Bewegung der Abtasteinrichtung in der Längsrichtung der Inkrementalspur. Eine Information über eine bestimmte absolute Position mit Bezug auf die Massverkörperung liefert dieses Signal allerdings nicht.

Eine Massverkörperung mit einer absoluten Kodierung weist in der Regel eine Absolutspur mit einer Mehrzahl von Positionsmarkierungen zur Kodierung von mehreren vorgegebenen absoluten Positionen auf, welche in Längsrichtung der Absolutspur hintereinander liegen. Die Positionsmarkierungen der Absolutspur kennzeichnen jeweils bestimmte absolute Positionen mit Bezug auf die Massverkörperung und sind derart ausgebildet, dass beim Abtasten der Positionsmarkierungen mittels der Abtsteinrichtung ein Signal entsteht, welches eine Information über die absoluten Positionen enthält, welche den jeweils abgetasteten Positionsmarkierungen zugeordnet sind.

In der Druckschrift US 7432497 B2 ist eine lineare Wegmessvorrichtung zum Bestimmen einer absoluten Position offenbart, welche eine Mehrzahl von Massstäben umfasst, welche in einer Reihe hintereinander angeordnet sind und jeweils eine sich über die gesamte Länge des jeweiligen Massstabs erstreckende Absolutspur mit einer Mehrzahl von Positionsmarkierungen zur Kodierung von mehreren absoluten Positionen aufweisen. Die einzelnen Massstäbe sind hinsichtlich der Struktur der Absolutspur, insbesondere hinsichtlich der Anordnung der jeweiligen Positionsmarkierungen zur Kodierung von absoluten Positionen auf der jeweiligen Absolutspur, absolut identisch. Die in der Absolutspur eines einzelnen Massstabs enthaltenen Positionsmarkierungen sind deshalb lediglich geeignet, absolute Positionen mit Bezug auf diesen einzelnen Massstab zu kodieren. Um eine Mehrzahl absoluter Positionen über die gesamte Längserstreckung aller Massstäbe kodieren zu können, weist jeder Massstab zusätzlich eine neben der jeweiligen Absolutspur angeordnete Massstabskodierung auf, welche jeden Massstab eindeutig kennzeichnet und von den anderen Massstäben unterscheidet. Weiterhin ist eine Abtastvorrichtung vorhanden, welche in der Längsrichtung der Massstäbe bewegbar ist und eine Sensoranordnung mit drei oder mehr Sensoren zum Abtasten der Absolutspuren und der Massstabskodierungen umfasst. Ein erster und ein zweiter Sensor der Sensoranordnung der Abtasteinrichtung sind zum Abtasten der Absolutspuren bestimmt, wobei der erste und der zweite Sensor bezüglich der Längsrichtung der Massstäbe in einen vorbestimmten Abstand relativ zueinander angeordnet sind und die Massstäbe derart angeordnet sind, dass der Abstand von je zwei aufeinanderfolgenden Massstäben kleiner ist als der vorbestimmte Abstand zwischen dem ersten und dem zweiten Sensor. Auf diese Weise ist gewährleistet, dass - zumindest dann, wenn die Abtastvorrichtung in einem Übergangsbereich zwischen zwei benachbarten Massstäben platziert ist - die Absolutspuren von zwei benachbarten Massstäben mittels des ersten und des zweiten Sensors abtastbar sind und mittels des ersten Sensors eine absolute Position mit Bezug auf einen der zwei benachbarten Massstäbe und mittels des zweiten Sensors eine absolute Position mit Bezug auf die andere der zwei benachbarten Massstäbe ermittelbar ist. Weiterhin umfasst die Sensoranordnung zumindest einen dritten Sensor zum Abtasten der jeweiligen Massstabskodierung eines Massstabs. Um eine absolute Position mit Bezug auf die gesamte Anordnung aller Massstäbe bestimmen zu können, umfasst die Wegmessvorrichtung eine Recheneinheit, welche Messsignale, die von dem ersten und dem zweiten Sensor beim Abtasten der Absolutspuren bzw. vom dritten Sensor beim Abtasten der Massstabskodierungen erzeugt werden, auswertet und aus diesen Messsignalen die absolute Position mit Bezug auf die gesamte Anordnung aller Massstäbe berechnet. Diese Wegmessvorrichtung hat den Nachteil, dass alle Massstäbe derart unterschiedlich ausgebildet sein müssen, dass jeder Massstab sich von allen anderen Massstäben unterscheidet (zumindest durch die jeweiligen Massstabskodierungen). Zur Realisierung des Messsystems muss deshalb unter Umständen eine grosse Zahl jeweils verschiedener Massstäbe bereitgestellt werden. Falls einer der Massstäbe im Betrieb der Wegmessvorrichtung unbrauchbar werden sollte und durch einen anderen Massstab ersetzt werden müsste, ergibt sich als weiterer Nachteil, dass der unbrauchbare Massstab nur durch einen anderen Massstab ersetzt werden kann, welcher sich von allen übrigen Massstäben unterscheidet, was die Auswahl des anderen Massstabs einschränkt.

Da die verschiedenen Massstäbe der Wegmessvorrichtung bei einer Installation in der Regel nur mit bestimmten Toleranzen hinsichtlich ihrer Position montiert werden können, weisen jeweils zwei benachbarte (in Längsrichtung der Massstäbe unmittelbar hintereinander angeordnete) Massstäbe nach der Installation in Längsrichtung der Massstäbe einen bestimmten Abstand auf, welcher zunächst nicht genau bekannt ist. Dementsprechend weisen auch die beiden Absolutspuren, welche an zwei benachbarten (in Längsrichtung der Massstäbe unmittelbar hintereinander angeordneten) Massstäben ausgebildet sind, in Längsrichtung der Massstäbe einen bestimmten Abstand auf, welcher ebenfalls zunächst nicht genau bekannt ist.

Um eine absolute Position mit Bezug auf die gesamte Anordnung aller Massstäbe bestimmen zu können, ist es daher bei einer ersten Inbetriebnahme der Wegmessvorrichtung notwendig, die Abtasteinrichtung zu veranlassen, eine "Initialisierungsfahrt" entlang der gesamten Anordnung aller Massstäbe in Längsrichtung der Massstäbe durchzuführen. Bei einer derartigen Initialisierungsfahrt der Abtasteinrichtung werden mittels des ersten und des zweiten Sensors die jeweiligen Absolutspuren gleichzeitig abgetastet und durch Vergleich der vom ersten Sensor und vom zweiten Sensor erzeugten Messsignale die jeweiligen Abstände zwischen jeweils zwei Absolutspuren, welche an zwei benachbarten (in Längsrichtung der Massstäbe unmittelbar hintereinander angeordneten) Massstäben ausgebildet sind, berechnet. Diese berechneten Abstände zwischen je zwei benachbarten Absolutspuren werden dabei in einem Datenspeicher gespeichert. Im Anschluss an diese Initialisierungsfahrt der Abtasttasteinrichtung ist die Recheneinheit der Wegmessvorrichtung schliesslich in der Lage, aus den vom ersten, zweiten und dritten Sensor erzeugten Messsignalen und den im Datenspeicher gespeicherten Abständen zwischen je zwei benachbarten Absolutspuren jeweils die momentane absolute Position der Abtasttasteinrichtung mit Bezug auf die gesamte Anordnung aller Massstäbe zu berechnen.

Falls einer der Massstäbe im Betrieb der Wegmessvorrichtung unbrauchbar werden sollte und durch einen anderen Massstab ersetzt werden müsste, ergibt sich als weiterer Nachteil, dass nach dem Ersatz des unbrauchbaren Massstabs durch einen anderen Massstab wieder eine Initialisierungsfahrt der Abtasttasteinrichtung in der Längsrichtung der Massstäbe (zumindest über einen Teil der Massstäbe) durchgeführt werden muss und die Positionsmarkierungen der jeweiligen Massstäbe mittels der Abtasteinrichtung wiederholt abgetastet werden müssen, damit die Abstände zwischen je zwei benachbarten Absolutspuren auch nach dem Austausch des unbrauchbaren Massstabs auf der Grundlage aktualisierter Messwerte neu erfasst und im Datenspeicher gespeichert werden können.

Aus der Druckschrift EP 2 533 018 A1 ist ein lineares Wegmesssystem zum Bestimmen einer Position eines Laufschlittens in Relation zu einer aus einer Mehrzahl von Einzelschienen zusammengesetzten Laufschiene bekannt. Jede der Einzelschienen ist mit einem sich in der Längsrichtung erstreckenden Massstab versehen, welcher inkrementelle Positionsmarkierungen und/oder absolute Positionsmarkierungen umfasst. Hierbei ist vorgesehen, dass alle Massstäbe hinsichtlich der Positionsmarkierungen identisch ausgebildet sind und die (jeweils mit einem Massstab versehenen) Einzelschienen als identische Bauteile bereitgestellt werden können. Um verschiedene Einzelschienen voneinander unterscheiden zu können, kann jede Einzelschiene mit einer individuellen Kodierung versehen sein. Die individuelle Kodierung eine Einzelschiene ist hierbei durch eine Mehrzahl von Verschlussstopfen implementiert, welche in jeweilige Bohrungen der Einzelschiene eingesetzt werden und diese Bohrungen verschliessen, wobei jeder Verschlussstopfen eine diskrete Information trägt, welche die individuelle Kodierung der jeweiligen Einzelschiene repräsentiert. Weiterhin ist eine Abtasteinrichtung mit Sensoren zum Abtasten der Positionsmarkierungen der Massstäbe und der an den Verschlussstopfen ausgebildeten individuellen Kodierungen vorhanden. Die Bohrungen, in welche die Verschlussstopfen einzusetzen sind, sind in der Regel durchgehende Bohrungen, in welche Befestigungsmittel zum Befestigen der jeweiligen Einzelschiene an einer Unterlage einsetzbar sind. Dementsprechend können die jeweiligen Verschlussstopfen erst nach einer Montage der Einzelschienen installiert werden und müssen wieder entfernt werden, falls eine Einzelschiene ausgetauscht werden müsste (z.B. im Falle eines Defekts). Das hat den Nachteil, dass nach einer Inbetriebnahme des Wegmesssystems im Lauf der Zeit einzelne Verschlussstopfen unerwünschterweise entfernt werden können und ggf. verloren gehen können oder verschiedene Verschlussstopfen von Benutzern des Wegmesssystems miteinander vertauscht oder fehlerhaft platziert werden können (z.B. an einem falschen Ort, d.h. nicht in einer Bohrung, welche der jeweiligen individuellen Kodierung zugeordnet ist, die an dem jeweiligen Verschlussstopfen ausgebildet ist). Letzteres führt im Betrieb des Wegmesssystems zu Fehlern bei der Bestimmung einer Position und beeinträchtigt folglich die Funktionsfähigkeit des Wegmesssystems.

Die Druckschrift JP 2003-222512 A offenbart eine lineare Wegmessvorrichtung, welche mehrere hintereinander angeordnete Massstäbe mit jeweils einer Skala und einen in Längsrichtung der Massstäbe bewegbaren Körper umfasst. An dem bewegbaren Körper sind zwei Abtasteinrichtungen befestigt, welche in Längsrichtung der Massstäbe einen Abstand relativ zueinander aufweisen, sodass sich jeweils mindestens eine der Abtasteinrichtungen gegenüber einer Skala eines der Massstäbe befindet. Die Skalen der jeweiligen Massstäbe können eine Inkrementalspur enthalten. Eine der Skalen kann eine Absolutspur enthalten. Durch Auswertung der Signale der beiden Abtasteinrichtungen bei einer Bewegung entlang der Massstäbe ist es möglich, den jeweiligen Abstand zweier unmittelbar hintereinander angeordneter Skalen zu bestimmen. Anschliessend ist es möglich, durch Auswertung der Signale der beiden Abtasteinrichtungen bei einer Bewegung entlang der Massstäbe kontinuierlich Positionsdaten des bewegbaren Körpers zu ermitteln.

Die Druckschrift JP 2006-098139 A beschreibt einen Linearencoder zum Bestimmen einer absoluten Position entlang einer Wegstrecke, wobei eine absolute Skala vorhanden ist, welche sich lediglich entlang eines Teilbereichs der Wegstrecke erstreckt. Weiterhin ist eine inkrementelle Skala vorhanden, welche sich über die gesamte Länge der Wegstrecke erstreckt. Ein entlang der Wegstrecke bewegbarer Detektor ist ausgebildet, sowohl die absolute Skala als auch die inkrementelle Skala abzutasten. Nach Inbetriebnahme des Linearencoders muss der Detektor zunächst in den Bereich der absoluten Skala gebracht werden, damit der Detektor zumindest eine absolute Position im Bereich der absoluten Skala detektieren kann. Anschliessend kann eine beliebige absolute Position des Detektors entlang der Wegstrecke mit Bezug auf die zuvor detektierte absolute Position bestimmt werden mittels Abtasten der inkrementellen Skala und einer Bestimmung eines vom Detektor zurückgelegten Weges relativ zu der zuvor detektierten absoluten Position. Die absolute Position wird dabei berechnet aus der zuvor detektierten absoluten Position und der Länge des vom Detektor zurückgelegten Weges relativ zu der zuvor detektierten absoluten Position.

Die Druckschrift EP 0 171 383 A1 offenbart ein Wegmesssystem mit einem Massstab, auf dem eine Inkrementalspur und eine weitere Spur mit einer oder mehreren Referenzmarken ausgebildet ist. Zum Abtasten der Inkrementalspur und der jeweiligen Referenzmarken ist eine Abtasteinheit mit mehreren Abtastelementen zum Abtasten der Inkrementalspur und mit einem weiteren Abtastelement zum Abtasten der jeweiligen Referenzmarken vorgesehen. Eine Auswerteeinheit zum Auswerten der Signale der Abtastelemente zum Abtasten der Inkrementalspur und der Signale des Abtastelements zum Abtasten der Referenzmarken ermöglicht eine "quasi absolute" Messung einer Position mit Bezug auf eine Referenzmarke.

Die Druckschrift DE 35 09 838 A1 offenbart verschiedene Ausführungsformen einer Positionsmesseinrichtung, mit welcher eine absolute Position eines bewegbaren Maschinenteils mit Bezug auf ein anderes Maschinenteil bestimmbar ist. Die Positionsmesseinrichtung umfasst wenigstens eine Massverkörperung mit einer Inkrementalteilung und mit einer Referenzmarke oder - alternativ zu einer Referenzmarke - mit einer Referenz-Codeteilung. Eine Abtasteinheit ist in Längsrichtung der Massverkörperung bewegbar, sodass mit der Abtasteinheit sowohl eine Inkrementalteilung als auch eine Referenzmarke bzw. alternativ ein Nullpunkt einer Referenz-Codeteilung abgetastet wird und die Bestimmung einer Position mit Bezug auf eine Referenzmarke oder einen Nullpunkt einer Referenz-Codeteilung ermöglicht wird.

### Zusammenfassung der Erfindung

Der vorliegenden Erfindung liegt die Aufgabe zugrunde, die genannten Nachteile zu vermeiden und eine lineare Wegmessvorrichtung zum Bestimmen einer absoluten Position mit Bezug auf eine aus mehreren einzelnen Schienensegmenten zusammengesetzte lineare Schiene zu schaffen, welche auf einfache Weise installierbar und in Betrieb nehmbar ist und einen einfachen Austausch einzelner Schienensegmente ermöglicht. Weiterhin soll eine Linearführung in Kombination mit einer derartigen linearen Wegmessvorrichtung zum Bestimmen einer absoluten Position vorgeschlagen werden.

Diese Aufgabe wird gelöst durch eine lineare Wegmessvorrichtung zum Bestimmen einer absoluten Position mit den Merkmalen des Anspruchs 1 und eine Linearführung mit den Merkmalen des Anspruchs 9.

Die lineare Wegmessvorrichtung zum Bestimmen einer absoluten Position umfasst eine lineare Schiene, welche eine Längsachse aufweist und aus mehreren einzelnen Schienensegmenten zusammengesetzt ist, welche Schienensegmente in Richtung der Längsachse hintereinander angeordnet sind, wobei jedes der Schienensegmente eine Massverkörperung aufweist, welche zumindest eine sich in Richtung der Längsachse erstreckende erste Inkrementalspur mit einer Mehrzahl von äquidistant angeordneten Positionsmarkierungen umfasst, und wobei die Massverkörperung eines der Schienensegmente neben der ersten Inkrementalspur dieser Massverkörperung eine Absolutspur mit einer Mehrzahl von Positionsmarkierungen zur Kodierung von mehreren vorgegebenen absoluten Positionen, welche in Richtung der Längsachse hintereinander liegen, aufweist.

Die lineare Wegmessvorrichtung umfasst ausserdem eine Abtasteinrichtung mit einer Sensoranordnung zum Abtasten der Massverkörperungen, welche Sensoranordnung mindestens einen ersten Sensor, einen zweiten Sensor und einen dritten Sensor umfasst. Die Abtasteinrichtung ist bezüglich der Schiene derart geführt, dass sie in Richtung der Längsachse entlang mehrerer der Schienensegmente bewegbar ist, wobei der erste Sensor ausgebildet ist, mindestens eine Positionsmarkierung der ersten Inkrementalspur eines der Schienensegmente zu detektieren und ein erstes Signal zu erzeugen, welches eine Information über eine Position der Abtasteinrichtung relativ zu der mindestens einen, vom ersten Sensor detektierten Positionsmarkierung enthält, und wobei der zweite Sensor ausgebildet ist, mindestens eine Positionsmarkierung der ersten Inkrementalspur eines der Schienensegmente zu detektieren und ein zweites Signal zu erzeugen, welches eine Information über eine Position der Abtasteinrichtung relativ zu der mindestens einen, vom zweiten Sensor detektierten Positionsmarkierung enthält. Der erste Sensor und der zweite Sensor sind in Richtung der Längsachse relativ zueinander um eine vorbestimmte Distanz versetzt angeordnet, sodass die Abtasteinrichtung bezüglich je zwei benachbarten Schienensegmenten in eine Position bringbar ist, in welcher der erste Sensor mindestens eine der Positionsmarkierungen der ersten Inkrementalspur der Massverkörperung der einen der zwei benachbarten Schienensegmente detektiert und der zweite Sensor mindestens eine der Positionsmarkierungen der ersten Inkrementalspur der Massverkörperung der anderen der zwei benachbarten Schienensegmente detektiert. Der dritte Sensor ist ausgebildet, die Absolutspur der Massverkörperung des einen der Schienensegmente abzutasten und ein drittes Signal zu erzeugen, welches eine Information über eine Position der Abtasteinrichtung relativ zu den vorgegebenen absoluten Positionen enthält.

Die lineare Wegmessvorrichtung umfasst ausserdem eine erste Auswerteeinrichtung für das dritte Signal, welche ausgebildet ist zu detektieren, ob sich die Abtasteinrichtung an einer der vorgegebenen absoluten Positionen bezüglich des einen der Schienensegmente befindet, und - falls eine Auswertung des dritten Signals ergibt, dass sich die Abtasteinrichtung an einem ersten Zeitpunkt an einer der vorgegebenen absoluten Positionen bezüglich des einen der Schienensegmente befindet - einen ersten Absolutwert zu ermitteln, welcher diese eine der vorgegebenen absoluten Positionen repräsentiert.

Die lineare Wegmessvorrichtung umfasst auch eine zweite Auswerteeinrichtung für das erste Signal und das zweite Signal, welche ausgebildet ist, nach dem ersten Zeitpunkt das erste Signal und das zweite Signal während eines ersten Zeitintervalls zwischen dem ersten Zeitpunkt und einem zweiten Zeitpunkt auszuwerten und eine Positionsdifferenz zwischen der Position der Abtasteinrichtung zu Beginn des ersten Zeitintervalls und einer Position der Abtasteinrichtung zu dem zweiten Zeitpunkt am Ende des ersten Zeitintervalls zu ermitteln.

Ausserdem ist eine Recheneinheit vorhanden, welche ausgebildet ist, aus dem ersten Absolutwert und der von der zweiten Auswerteeinrichtung ermittelten Positionsdifferenz einen zweiten Absolutwert zu berechnen, welcher eine absolute Position der Abtasteinrichtung zum zweiten Zeitpunkt am Ende des ersten Zeitintervalls repräsentiert.

Gemäss der Erfindung umfasst die Massverkörperung mindestens eines der Schienensegmente - mit Ausnahme des einen der Schienensegmente, welches die Absolutspur aufweist - eine zweite Inkrementalspur, welche sich neben der ersten Inkrementalspur dieses mindestens einen der Schienensegmente in Richtung der Längsachse erstreckt und eine Mehrzahl von äquidistant angeordneten Positionsmarkierungen aufweist. Die zweite Inkrementalspur ist relativ zum dritten Sensor der Abtasteinrichtung derart angeordnet, dass die zweite Inkrementalspur mittels des dritten Sensors abtastbar ist und die Positionsmarkierungen der zweiten Inkrementalspur mittels des dritten Sensors detektierbar sind, wobei der dritte Sensor ausgebildet ist, beim Abtasten der zweiten Inkrementalspur ein viertes Signal zu erzeugen, und die Recheneinheit ausgebildet ist, das vierte Signal mit dem ersten Signal und/oder dem zweiten Signal zu vergleichen.

Die lineare Wegmessvorrichtung gemäss der Erfindung zeichnet sich dadurch aus, dass jedes der Schienensegmente der linearen Schiene eine Massverkörperung aufweist und die Massverkörperungen aller Schienensegmente eine Inkrementalspur mit einer Mehrzahl von äquidistant angeordneten Positionsmarkierungen aufweisen, wobei lediglich die Massverkörperung eines der Schienensegmente zusätzlich eine Absolutspur mit einer Mehrzahl von Positionsmarkierungen zur Kodierung von mehreren vorgegebenen absoluten Positionen aufweist und wobei eine in Längsrichtung der linearen Schiene bewegbare Abtasteinrichtung mit einer Sensoranordnung vorhanden ist, welche eine Abtastung der Positionsmarkierungen der Inkrementalspuren der jeweiligen Schienensegmente und der Positionsmarkierungen der Absolutspur des einen der Schienensegmente ermöglicht. Bei einer Inbetriebnahme der Wegmessvorrichtung ist es lediglich erforderlich, dass die Abtasteinrichtung bezüglich des einen Schienensegments, welches die Absolutspur aufweist, in eine Position gebracht wird, in welcher der dritte Sensor der Abtasteinrichtung (entsprechend dem oben genannten "ersten Absolutwert") eine der vorgegebenen absoluten Positionen detektiert, welche auf der einen Absolutspur kodiert sind. Die Position, an welcher sich die Abtasteinrichtung im Moment der Detektion der einen der vorgegebenen absoluten Positionen bezüglich des einen der Schienensegmente befindet, kann somit mit der einen der absoluten Positionen identifiziert werden, welche vom dritten Sensor detektiert wurde. Jede Bewegung der Abtasteinrichtung, welche die Abtasteinrichtung in der Längsrichtung der Führungsschiene von der einen der absoluten Positionen entfernt, welche vom dritten Sensor zuvor detektiert wurde, kann anschliessend durch Abtasten der Inkrementalspuren der jeweiligen Schienensegmente mithilfe des ersten und des zweiten Sensors registriert und quantitativ charakterisiert werden. Eine Auswertung des vom ersten Sensor erzeugten ersten Signals und des vom zweiten Sensor erzeugten zweiten Signals umfasst hierbei insbesondere eine Registrierung einer Änderung des ersten Signals oder einer Änderung des zweiten Signals und ermöglicht hierbei eine präzise Messung der Positionsdifferenz (d.h. der Entfernung) zwischen der Position, an welcher sich die Abtasteinrichtung momentan befindet, und der einen der vorgegebenen absoluten Positionen, welche zuvor mittels des dritten Sensors detektiert wurde, zumal jede Änderung des ersten Signals bzw. jede Änderung des zweiten Signals mit einer bestimmten Änderung der Position der Abtasteinrichtung in Richtung der Längsachse korrespondiert. Die Recheneinheit liefert schliesslich - als Ergebnis einer Berechnung auf der Grundlage der gemessenen Positionsdifferenz und des ersten Absolutwerts für die eine der vorgegebenen absoluten Positionen, welche zuvor mittels des dritten Sensors detektiert wurde - einen "zweiten Absolutwert", welcher die Position, an welcher sich die Abtasteinrichtung momentan befindet, mit Bezug auf die gesamte Anordnung aller Schienensegmente eindeutig identifiziert und demzufolge eine absolute Position der Abtasteinrichtung definiert. Nach der Detektion einer der vorgegebenen absoluten Positionen, welche auf der einen Absolutspur kodiert sind, stellt demnach die Recheneinheit eine aktuelle Information über eine absolute Position der Abtasteinrichtung mit Bezug auf die gesamte Anordnung aller Schienensegmente bereit. Die von der Recheneinheit berechnete absolute Position wird bei jeder Bewegung der Abtasteinrichtung in der Längsrichtung der Schiene (entsprechend der jeweiligen momentanen Position) aktualisiert. Die Abtasteinrichtung kann hierbei an eine beliebige Position an einem beliebigen Schienensegment bewegt werden. Auf diese Weise ist jeder beliebigen Position, welche die Abtasteinrichtung mit Bezug auf die gesamte Anordnung aller Schienensegmente einnehmen kann, eine (eindeutige) absolute Position zugeordnet, welche mittels der Recheneinheit berechenbar ist.

Diese Berechnung der absoluten Position setzt lediglich voraus, dass für jede beliebige Position, welche die Abtasteinrichtung mit Bezug auf die gesamte Anordnung aller Schienensegmente einnehmen kann, die Positionsdifferenz (d.h. die Entfernung) zwischen dieser beliebigen Position und der einen der vorgegebenen absoluten Positionen, welche zuvor mittels des dritten Sensors detektiert wurde, messbar ist. Die Messbarkeit dieser Positionsdifferenz ist im vorliegenden Fall grundsätzlich dadurch gewährleistet, dass der erste Sensor und der zweite Sensor in Richtung der Längsachse relativ zueinander um eine vorbestimmte Distanz versetzt angeordnet sind, sodass die Abtasteinrichtung bezüglich je zwei benachbarten Schienensegmenten in eine Position bringbar ist, in welcher der erste Sensor mindestens eine der Positionsmarkierungen der ersten Inkrementalspur der Massverkörperung der einen der zwei benachbarten Schienensegmente detektiert und der zweite Sensor mindestens eine der Positionsmarkierungen der ersten Inkrementalspur der Massverkörperung der anderen der zwei benachbarten Schienensegmente detektiert. Letzteres gewährleistet, dass - unabhängig von der Position der Abtasteinrichtung - mindestens einer der Sensoren der Abtasteinrichtung (d.h. der erste Sensor, der zweite Sensor oder sowohl der erste Sensor als auch der zweite Sensor) derart mit Bezug auf die Inkrementalspuren platziert ist, dass an jedem Zeitpunkt mindestens ein Signal (d.h. das erste Signal und/oder das zweite Signal) erzeugbar ist, welches mit einer Abtastung der Positionsmarkierungen einer der Inkrementalspuren im Zusammenhang steht und demzufolge zu jedem Zeitpunkt eine Messung einer Positionsveränderung der Abtasteinrichtung in Längsrichtung der linearen Schiene auf der Grundlage einer Auswertung des ersten Signals und/oder des zweiten Signals ermöglicht.

Die Wegmessvorrichtung hat den Vorteil, dass alle Schienensegmente einschliesslich der an dem jeweiligen Schienensegment vorhandenen Massverkörperung - mit Ausnahme des Schienensegments, welches die Absolutspur aufweist - völlig identisch aufgebaut sein können und dementsprechend in einer beliebigen Reihenfolge hintereinander angeordnet sein können, um die lineare Schiene zu bilden. Dies vereinfacht die Bereitstellung aller Schienensegmente, welche zum Aufbau der linearen Schiene benötigt werden, erheblich und erleichtert ausserdem die Montage aller Schienensegmente. Letzteres ist insbesondere zutreffend, wenn ein Schienensegment derart mit einer Massverkörperung versehen ist, dass das Schienensegment zusammen mit der Massverkörperung als ein einzelner Körper vorliegt, welcher als Ganzes transportiert und an einem vorbestimmten Ort montiert werden kann. Weiterhin ist die Inbetriebnahme der Wegmessvorrichtung dadurch vereinfacht, dass zu Beginn der Inbetriebnahme lediglich eine einzige der absoluten Positionen detektiert werden muss, welche auf der einen Absolutspur an einem der Schienensegmente kodiert sind. Für jede beliebige andere Position, in welche die Abtasteinrichtung anschliessend abweichend von der einen bereits detektierten absoluten Position bewegbar ist, kann anschliessend direkt von der Recheneinheit eine absolute Position berechnet werden (auf der Grundlage einer Messung der Positionsdifferenz bezüglich der bereits detektierten absoluten Position mittels einer Abtastung der Inkrementalspuren). Diese Berechnung der absoluten Position kann unmittelbar nach dem Detektieren einer einzigen der absoluten Positionen durchgeführt werden, welcher auf der einen Absolutspur an einem der Segmente kodiert sind, und zwar für jede beliebige Position an einem beliebigen Schienensegment, an welche die Abtasteinrichtung gebracht werden kann. Aus diesem Grund kann jede mögliche absolute Position der Abtasteinrichtung unmittelbar nach dem Detektieren einer einzigen der absoluten Positionen an der einen Absolutspur an einem der Schienensegmente ermittelt werden, ohne dass die Abtasteinrichtung zuvor eine Initialisierungsfahrt über die gesamte Länge der linearen Schienen (d.h. entlang aller Schienensegmente) durchzuführen muss und alle Positionsmarkierungen aller Massverkörperungen abtasten muss. Auf diese Weise kann eine Inbetriebnahme der Wegmessvorrichtung vorteilhafterweise mit verhältnismässig geringem Aufwand durchgeführt werden, zumal eine Initialisierungsfahrt der vorstehend genannten Art unnötig ist.

Die Wegmessvorrichtung ist derart ausgebildet, dass die Massverkörperung mindestens eines der Schienensegmente - mit Ausnahme des einen der Schienensegmente, welches die Absolutspur aufweist - eine zweite Inkrementalspur umfasst, welche sich neben der ersten Inkrementalspur dieses mindestens einen der Schienensegmente in Richtung der Längsachse erstreckt und eine Mehrzahl von äquidistant angeordneten Positionsmarkierungen aufweist, und die zweite Inkrementalspur relativ zum dritten Sensor der Abtasteinrichtung derart angeordnet ist, dass die zweite Inkrementalspur mittels des dritten Sensors abtastbar ist und die Positionsmarkierungen der zweiten Inkrementalspur mittels des dritten Sensors detektierbar sind. Die zweite Inkrementalspur bietet die Möglichkeit, durch Abtasten der (inkrementellen) Positionsmarkierungen der zweiten Inkrementalspur mittels des dritten Sensors mindestens ein zusätzliches Messsignal zu generieren, welches insbesondere geeignet ist, Informationen zu liefern, welche eine Kontrolle der Wegmessvorrichtung ermöglichen, beispielsweise im Hinblick auf konstruktive Einzelheiten der Schienensegmente und/oder die Funktionsfähigkeit der Wegmessvorrichtung. Beispielsweise können die Massverkörperung mehrerer Schienensegmente und insbesondere die Massverkörperungen aller Schienensegmente - mit Ausnahme des einen der Schienensegmente, welches die Absolutspur aufweist - eine derartige zweite Inkrementalspur umfassen.

Gemäss einer Variante sind zwei benachbarte Positionsmarkierungen der zweiten Inkrementalspur in einem Abstand zueinander angeordnet, welcher grösser als der Abstand zwischen zwei benachbarten Positionsmarkierungen der ersten Inkrementalspur ist. Alternativ oder zusätzlich kann der dritte Sensor ausgebildet sein, beim Abtasten der zweiten Inkrementalspur ein viertes Signal zu erzeugen, und die Recheneinheit ausgebildet sein, das vierte Signal mit dem ersten Signal und/oder dem zweiten Signal zu vergleichen.

Bei einer Bewegung der Abtasteinrichtung in der Längsrichtung der linearen Schiene ist zu erwarten, dass der erste Sensor, der zweite Sensor bzw. der dritte Sensor beim Abtasten der Positionsmarkierungen der ersten Inkrementalspur bzw. beim Abtasten der Positionsmarkierungen der zweiten Inkrementalspur jeweils Signale, welche idealerweise (d.h. wie es bei korrekter Funktion der Wegmessvorrichtung zu erwarten ist) jeweils Signale erzeugen, welche periodisch variieren als Funktion einer Ortskoordinate, welche die Position der Sensoranordnung kennzeichnet und sich dementsprechend bei einer Bewegung der Abtasteinrichtung in der Längsrichtung der Inkrementalspur verändert, wobei alle diese Signale miteinander synchronisiert sind. Sollten im Betrieb der Wegmessvorrichtung die von den jeweiligen Sensoren erzeugten Signale wider Erwarten ein hiervon abweichendes Verhalten zeigen, könnte dies auf bestimmte Mängel und/oder Unregelmässigkeiten hinweisen, beispielsweise auf Fehler hinsichtlich der Konstruktion und/oder Installation der Wegmessvorrichtung oder auf Unregelmässigkeiten im Betrieb der Wegmessvorrichtung (Betriebsstörungen).

Falls zwei benachbarte Positionsmarkierungen der zweiten Inkrementalspur in einem Abstand zueinander angeordnet sind, welcher grösser als der Abstand zwischen zwei benachbarten Positionsmarkierungen der ersten Inkrementalspur ist, erzeugen der erste und der zweite Sensor bei einer Bewegung der Abtasteinrichtung in der Längsrichtung der linearen Schiene jeweils periodisch als Funktion der Zeit variierende Signale (d.h. das erste Signal bzw. das zweite Signal), welche mit einer grösseren Frequenz variieren als ein entsprechendes (periodisch als Funktion der Zeit variierendes) Signal (das vierte Signal), welches der dritte Sensor beim Abtasten der zweiten Inkrementalspur erzeugt. Die vom ersten Sensor bzw. dem zweiten Sensor erzeugten Signale sind in diesem Fall von dem vom dritten Sensor erzeugten Signal anhand der jeweiligen Frequenzen unterscheidbar, mit welchen die Signale als Funktion der Zeit variieren. Die Grösse des Abstandes, in dem jeweils zwei benachbarte Positionsmarkierungen der zweiten Inkrementalspur in Längsrichtung der linearen Schiene hintereinander angeordnet sind, kann jeweils frei gewählt werden, beispielsweise derart, dass die jeweilige Grösse dieses Abstandes in Abhängigkeit von charakteristischen Parametern der Wegmessvorrichtung variiert und demnach als eine Kodierung der charakteristischen Parameter dient. Als "charakteristische Parameter der Wegmessvorrichtung" kommen diesbezüglich beispielsweise in Betracht: die "Baugrösse" des jeweiligen Schienensegments, charakterisiert durch die Länge, Höhe und/oder Breite des Schienensegments; eine Kennzeichnung einer bestimmten Ausführungsform der Wegmessvorrichtung, sofern die Wegmessvorrichtung in verschiedenen Ausführungsformen realisierbar ist. Eine Auswertung des vierten Signals, welches mittels des dritten Sensors beim Abtasten der zweiten Inkrementalspur erzeugbar ist, liefert in diesem Fall eine Information über die jeweiligen charakteristischen Parameter der Wegmessvorrichtung. Eine derartige Auswertung des vierten Signals ermöglicht beispielsweise eine mit technischen Mitteln automatisch durchführbare Kontrolle, ob die Wegmessvorrichtung tatsächlich "korrekt" installiert ist, d.h. insbesondere aus denjenigen Komponenten (beispielsweise Schienensegmenten) zusammengesetzt ist, welche ursprünglich für eine bestimmte Installation der Wegmessvorrichtung vorgesehen waren.

Der dritte Sensor ist derart angeordnet, dass er geeignet ist, jeweils abhängig von der jeweiligen Position, welche die Abtasteinrichtung bezüglich der linearen Schiene einnimmt, alternativ die Positionsmarkierungen der einen Absolutspur an dem einen der Schienensegmente oder die Positionsmarkierungen der zweiten Inkrementalspur an den anderen der Schienensegmente abzutasten. Die jeweilige zweite Inkrementalspur ist von der Absolutspur zumindest dadurch unterscheidbar, dass die zweite Inkrementalspur und die Absolutspur Positionsmarkierungen aufweisen, welche sich hinsichtlich ihrer räumlichen Anordnung unterscheiden (die Positionsmarkierungen der Absolutspur sind in der Regel nicht äquidistant angeordnet, im Gegensatz zu den Positionsmarkierungen einer Inkrementalspur). Eine Auswertung der jeweils vom dritten Sensor erzeugten Signale ermöglicht deshalb eine mit technischen Mitteln automatisch durchführbare Kontrolle, ob die Abtasteinrichtung gerade an dem einen Schienensegment angeordnet ist, welches die Absolutspur aufweist, oder ob die Abtasteinrichtung an einem anderen der Schienensegmente angeordnet ist.

Eine weitere Variante der vorstehend genannten Ausführungsform ist derart ausgebildet, dass die Absolutspur des einen der Schienensegmente eine erste Kodierung umfasst, welche eine Information über mindestens einen charakteristischen Parameter mindestens eines der anderen der Schienensegmente der linearen Schiene enthält, und die erste Kodierung mittels des dritten Sensors detektierbar ist. Hierbei kann der mindestens eine charakteristische Parameter beispielsweise eine Baugrösse mindestens eines der anderen der Schienensegmente oder ein Abstand zwischen zwei benachbarten Positionsmarkierungen der zweiten Inkrementalspur sein. Die erste Kodierung ist in der Absolutspur platziert, sodass sie mittels des dritten Sensors (bei einer entsprechenden Anordnung der Abtasteinrichtung bezüglich der Absolutspur) abtastbar ist. Der dritte Sensor ist dementsprechend ausgebildet, beim Abtasten der ersten Kodierung ein Signal zu erzeugen, welches beispielsweise mittels der ersten Auswerteeinrichtung auswertbar ist, um den mindestens einen charakteristischen Parameter der vorstehend genannten Art zu ermitteln. Derselbe charakteristische Parameter, welcher der in der Absolutspur des einen der Schienensegmente enthaltenen ersten Kodierung zugeordnet ist, kann auch in den jeweiligen zweiten Inkrementalspuren der anderen Schienensegmente kodiert sein: Wie erwähnt, kann die Grösse des Abstandes, in dem jeweils zwei benachbarte Positionsmarkierungen der zweiten Inkrementalspur in Längsrichtung der linearen Schiene hintereinander äquidistant angeordnet sind, derart gewählt werden, dass die jeweilige Grösse dieses Abstandes als eine Kodierung von charakteristischen Parametern der Wegmessvorrichtung (z.B. als Kodierung der Baugrösse des jeweiligen Schienensegments, charakterisiert durch die Länge, Höhe und/oder Breite des Schienensegments) dient. Dementsprechend können die erste Kodierung auf der Absolutspur des einen der Schienensegmente und die zweite Inkrementalspur der jeweiligen anderen Schienensegmente derart implementiert werden, dass die erste Kodierung auf der Absolutspur des einen der Schienensegmente und die zweite Inkrementalspur jeweils erkennen lassen, ob das eine Schienensegment, welches die Absolutspur aufweist, und jedes andere Schienensegment, welches die zweite Inkrementalspur aufweist, hinsichtlich vorbestimmter charakteristischer Parameter der Wegmessvorrichtung (z.B. hinsichtlich der Baugrösse der jeweiligen Schienensegmente) miteinander kompatibel sind. In diesem Fall ermöglicht eine Auswertung der jeweils vom dritten Sensor erzeugten Signale eine mit technischen Mitteln automatisch durchführbare Kontrolle, ob die lineare Schiene der Wegmessvorrichtung ausschliesslich aus Schienensegmenten zusammengesetzt ist, welche hinsichtlich vorbestimmter charakteristischer Parameter der Wegmessvorrichtung miteinander kompatibel sind.

Eine Ausführungsform der Wegmessvorrichtung ist derart ausgebildet, dass die Abtasteinrichtung, die erste Auswerteeinrichtung, die zweite Auswerteeinrichtung und/oder die Recheneinheit mittels einer Zufuhr von elektrischer Energie betreibbar sind und eine elektrische Energieversorgungseinrichtung vorhanden ist, welche ausgebildet ist, nach dem ersten Zeitpunkt eine unterbrechungsfreie Zufuhr von elektrischer Energie an die Abtasteinrichtung, die erste Auswerteeinrichtung, die zweite Auswerteeinrichtung und/oder die Recheneinheit zu ermöglichen. Die unterbrechungsfreie Zufuhr von elektrischer Energie nach dem ersten Zeitpunkt (d.h. nach dem Zeitpunkt, an dem die Abtasteinrichtung sich an einer der vorgegebenen absoluten Positionen bezüglich des einen der Schienensegmente befindet und einen ersten Absolutwert ermittelt hat, welcher diese eine der vorgegebenen absoluten Positionen repräsentiert) gewährleistet, dass die Abtasteinrichtung, die erste Auswerteeinrichtung und die zweite Auswerteeinrichtung in der Lage sind, nach dem ersten Zeitpunkteine Bewegung der Abtasteinrichtung in der Längsrichtung der linearen Schienen zu registrieren und die jeweilige Positionsdifferenz zwischen der momentanen Position der Abtasteinrichtung zu einem beliebigen zweiten Zeitpunkt nach dem ersten Zeitpunkt und der Position der Abtasteinrichtung zum ersten Zeitpunkt zu ermitteln. Dementsprechend ist gewährleistet, dass die Recheneinheit an dem zweiten Zeitpunkt einen "zweiten Absolutwert" bereitstellt, welcher die absolute Position repräsentiert, an welcher sich die Abtasteinrichtung zum zweiten Zeitpunkt befindet, und zwar unabhängig davon, in welche Position die Abtasteinrichtung gegebenenfalls nach dem ersten Zeitpunkt bewegt wurde. Dementsprechend ist gewährleistet, dass die Recheneinheit während der unterbrechungsfreien Zufuhr von elektrischer Energie ständig eine aktuelle Information über die absolute Position der Abtasteinrichtung mit Bezug auf die Gesamtheit aller Schienensegmente bereitstellt (beispielsweise für eine Steuereinrichtung zum Steuern einer Maschine, welche in Abhängigkeit vom zweiten Absolutwert gesteuert werden soll).

Eine Ausführungsform der Wegmessvorrichtung ist derart ausgebildet, dass die lineare Schiene aus mehr als zwei der Schienensegmente zusammengesetzt ist und alle Schienensegmente - mit Ausnahme des einen der Schienensegmente, welches die Absolutspur aufweist - identisch ausgebildet sind. Die Bezeichnung "identisch ausgebildet" umfasst hierbei, dass die Schienensegmente einschliesslich der jeweiligen Massverkörperungen identisch sind. Eine Verwendung mehrerer identischer Schienensegmente vereinfacht die Bereitstellung der für die Installation der Wegmessvorrichtung benötigten Schienensegmente und die Installation der Wegmessvorrichtung im Hinblick auf die Montage der Schienensegmente. Eine Verwendung mehrerer identischer Schienensegmente vereinfacht insbesondere eine Lagerhaltung für die jeweiligen Schienensegmente, welche für den Aufbau einer oder mehrerer Wegmessvorrichtungen benötigt werden, und vereinfacht die Logistik bei der Installation einer oder mehrerer Wegmessvorrichtungen.

Beispielsweise ist diese Ausführungsform wegen der Verwendung mehrerer identischer Schienensegmente vorteilhafterweise derart implementierbar, dass die Schienensegmente in beliebiger Reihenfolge hintereinander montierbar sind, um die lineare Schiene zu bilden. Bei einer Montage der Schienensegmente muss in diesem Fall niemand auf eine spezifische Reihenfolge der zu montierenden Schienensegmente achten, was die Durchführung der Montage vereinfacht, insbesondere im Hinblick auf eine Kontrolle der zu montierenden Schienensegmente während der Montage. Das hat den Vorteil, dass Fehler bei der Montage der Schienensegmente einfacher vermieden werden können.

Bei einer Inbetriebnahme der Wegmessvorrichtung ist massgeblich, dass die Abtasteinrichtung bezüglich des einen Schienensegments, welches die Absolutspur aufweist, in eine Position gebracht wird, in welcher der dritte Sensor der Abtasteinrichtung (entsprechend dem oben genannten "ersten Absolutwert") eine der vorgegebenen absoluten Positionen detektiert, welche auf der einen Absolutspur kodiert sind. Anschliessend kann jede Bewegung der Abtasteinrichtung, welche die Abtasteinrichtung in der Längsrichtung der linearen Schiene von der einen der absoluten Positionen entfernt, welche vom dritten Sensor zuvor detektiert wurde, durch Abtasten der Inkrementalspuren der jeweiligen Schienensegmente mithilfe des ersten und des zweiten Sensors registriert und quantitativ charakterisiert werden, sodass die Wegmessvorrichtung in der Lage ist, eine jeweils aktuelle absolute Position der Abtasteinrichtung zu berechnen. Die Reihenfolge, in welcher die einzelnen Schienensegmente hintereinander angeordnet sind, hat auf die Bestimmung der aktuellen absoluten Position der Abtasteinrichtung keinen Einfluss und ist deshalb hinsichtlich der Bestimmung der jeweils aktuellen absoluten Position der Abtasteinrichtung nicht relevant.

Weiterhin ist diese Ausführungsform wegen der Verwendung mehrerer identischer Schienensegmente vorteilhafterweise derart implementierbar, dass jedes der Schienensegmente - mit Ausnahme des einen der Schienensegmente, welches die Absolutspur aufweist - gegen ein identisches Schienensegment austauschbar ist. Ein derartiger Austausch eines der Schienensegmente könnte beispielsweise zweckmässig sein, falls sich eines der Schienensegmente, welche identisch ausgebildet sind, nach der Inbetriebnahme der Wegmessvorrichtung als defekt erweisen sollte, beispielsweise als Folge einer Beschädigung oder infolge eines Verschleisses. In diesem Fall kann das auszutauschende Schienensegment demontiert und durch ein anderes Schienensegment ersetzt werden. Der Austausch des einen Schienensegments kann während des Betriebs der Wegmessvorrichtung vorgenommen werden. Hierbei ist es zweckmässig, wenn die Abtasteinrichtung vor dem Austausch des einen Schienensegments bezüglich der linearen Schiene derart platziert wurde, dass die Sensoren der Abtasteinrichtung nicht die Positionsmarkierungen auf der Massverkörperung abtasten, welche an dem auszutauschenden Schienensegment ausgebildet ist. In diesem Fall stellt die Recheneinheit vor dem Austausch des einen Schienensegments einen Absolutwert bereit, welcher die aktuelle absolute Position der Abtasteinrichtung korrekt charakterisiert. Wird nun das auszutauschende Schienensegment demontiert und durch ein anderes Schienensegment ersetzt, so hat dies unter den vorstehend genannten Umständen keinen Einfluss auf den Absolutwert, welchen die Recheneinheit bereitstellt, zumal die Abtasteinrichtung in diesem Fall nicht derart platziert ist, dass die Sensoren der Abtasteinrichtung die Positionsmarkierungen auf der Massverkörperung des auszutauschenden Schienensegments detektieren können. Wird die Abtasteinrichtung nach dem Austausch des einen Schienensegments wieder in der Längsrichtung der linearen Schiene bewegt, so kann diese Bewegung der Abtasteinrichtung mithilfe des ersten und des zweiten Sensors durch Abtasten der Positionsmarkierungen der ersten Inkrementalspur der Massverkörperungen der jeweiligen Schienensegmente registriert und quantitativ charakterisiert werden, sodass die Wegmessvorrichtung in der Lage ist, die jeweils aktuelle absolute Position der Abtasteinrichtung korrekt zu berechnen. Nach dem Austausch des einen Schienensegments kann der Betrieb der Wegmessvorrichtung entsprechend einfach fortgesetzt werden. Um eine korrekte Bestimmung der aktuellen absoluten Position zu ermöglichen, ist es dementsprechend unnötig, die Abtasteinrichtung nach dem Austausch des einen Schienensegments zunächst derart zu platzieren, dass eine der Positionsmarkierungen der einen Absolutspur mittels des dritten Sensors der Abtasteinrichtung detektiert werden kann. Ebenso ist es unnötig, dass die Abtasteinrichtung nach dem Austausch des einen Schienensegments eine Initialisierungsfahrt über die gesamte Länge der linearen Schiene (d.h. entlang aller Schienensegmente) durchführt und alle Positionsmarkierungen aller Masseverkörperungen abtastet. Auf diese Weise kann ein Austausch eines Schienensegments vorteilhafterweise mit verhältnismässig geringem Aufwand durchgeführt werden.

Gegenstand der Erfindung ist ausserdem eine Linearführung, welche einen bewegbaren Körper und eine lineare Wegmessvorrichtung der vorstehend genannten Art umfasst. Der bewegbare Körper ist dabei über Wälzkörper an der linearen Schiene der linearen Wegmessvorrichtung gestützt, sodass die Wälzkörper eine geführte lineare Bewegung des bewegbaren Körpers in Längsrichtung der linearen Schiene ermöglichen, wobei die Abtasteinrichtung der linearen Wegmessvorrichtung am bewegbaren Körper angeordnet ist. Die von der Wegmessvorrichtung bestimmte absolute Position definiert in diesem Fall eine absolute Position des bewegbaren Körpers mit Bezug auf die lineare Schiene, welche aus mehreren in Längsrichtung der Schiene hintereinander angeordneten Schienensegmenten zusammengesetzt ist.

### Kurze Beschreibung der Zeichnungen

Weitere Einzelheiten der Erfindung und insbesondere beispielhafte Ausführungsformen der erfindungsgemässen linearen Wegmessvorrichtung und der erfindungsgemässen Linearführung werden im Folgenden anhand der beigefügten Zeichnungen erläutert. Es zeigen:
- Fig. 1: eine schematische Darstellung einer linearen Schiene, welche aus mehreren in Längsrichtung der linearen Schiene hintereinander angeordneten Schienensegmenten zusammengesetzt ist, wobei die Schienensegmente jeweils eine Massverkörperung mit Positionsmarkierungen aufweisen;
- Fig. 2: eine schematische Darstellung einer Abtasteinrichtung mit mehreren Sensoren zum Detektieren der Positionsmarkierungen der Massverkörperungen gemäss Fig. 1;
- Fig. 3: eine schematische Darstellung einer erfindungsgemässen Wegmessvorrichtung mit einer linearen Schiene gemäss Fig. 1 und einer Abtasteinrichtung gemäss Fig. 2;
- Fig. 4: eine schematische Darstellung einer erfindungsgemässen Linearführung zum Führen eines bewegbaren Körpers mit einer Wegmessvorrichtung gemäss Fig. 3.

### Beschreibung von Ausführungsformen

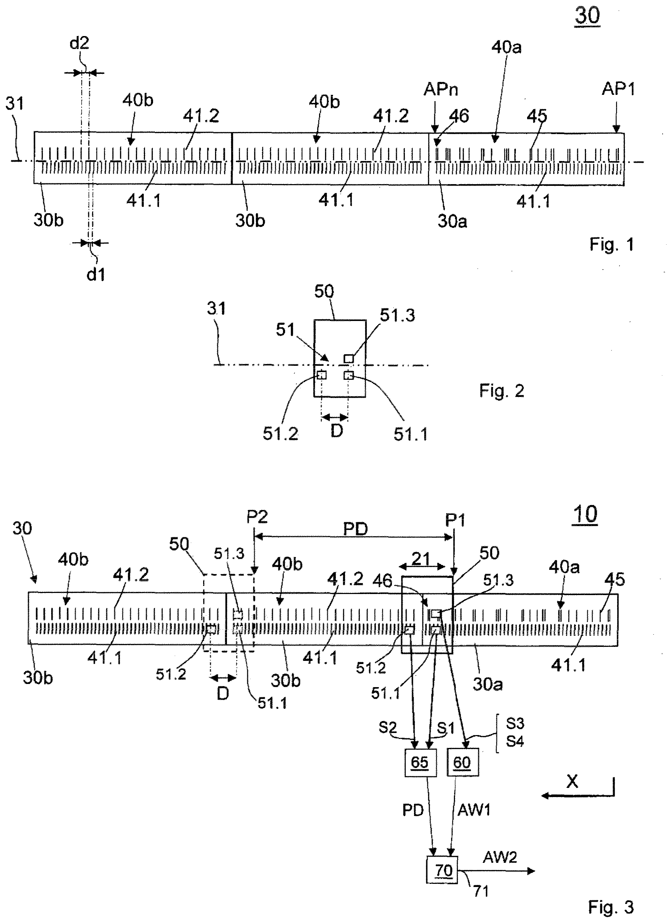

Mit Bezug auf Fig. 1-3 wird im Folgenden zunächst eine Ausführungsform einer linearen Wegmessvorrichtung gemäss der Erfindung erläutert. Die Fig. 3 zeigt - in einer schematischen Darstellung - eine Gesamtansicht einer erfindungsgemässen linearen Wegmessvorrichtung 10, welche eine aus mehreren einzelnen Schienensegmenten zusammengesetzte lineare Schiene 30 und eine in Richtung einer Längsachse 31 der linearen Schiene 30 bewegbare Abtasteinrichtung 50 zum Abtasten von Massverkörperungen umfasst. Zur Verdeutlichung des vorliegenden Sachverhalts zeigen Fig. 1 eine separate schematische Darstellung der Schiene 30 und Fig. 2 eine separate schematische Darstellung der Abtasteinrichtung 50.

Wie Fig. 1 und 3 andeuten, ist die Schiene 30 aus zwei oder mehr einzelnen Schienensegmenten zusammengesetzt, welche Schienensegmente in Richtung der Längsachse 31 hintereinander angeordnet sind, wobei die Gesamtheit aller Schienensegmente im vorliegenden Beispiel ein erstes Schienensegment 30a und zwei zweite Schienensegmente 30b aufweist. Im Rahmen der Erfindung wäre es auch möglich, dass die Schiene 30 nur ein zweites Schienensegment 30b oder mehr als zwei zweite Schienensegmente 30b aufweist. Die Schienensegmente 30a bzw. 30b sind vorzugsweise derart geformt, dass sie - um die Schiene 30 zu bilden - in Richtung der Längsachse 31 derart hintereinander montiert werden können, dass jeweils ein Ende eines der Schienensegmente 30a bzw. 30b an ein Ende eines anderen (benachbarten) Schienensegments 30a bzw. 30b stösst (wie Fig. 1 und 3 andeuten). Letzteres schliesst mit ein, dass zwischen aneinanderstossenden Enden zweier benachbarter Schienensegments ein Spalt vorhanden sein kann, um eine Montage und/oder Demontage der Schienensegmente zu erleichtern oder bei einer Montage der Schienensegmente eine Justage einzelner Schienensegmente relativ zueinander innerhalb vorgegebener Toleranzen zu ermöglichen. Die Schienensegmente werden bei einer Montage in der Regel mit geeigneten Befestigungsmitteln (z.B. Schrauben) an einer (in den Figuren nicht dargestellten) Tragstruktur befestigt, welche die Schiene 30 als Ganzes trägt.

Jedes der Schienensegmente 30a, 30b weist eine Massverkörperung auf. Um verschiedene Realisierungen von Massverkörperungen unterscheiden zu können, wird die Massverkörperung, welche das erste Schienensegment 30a aufweist, im Folgenden mit dem Bezugszeichen 40a bezeichnet, und die Massverkörperung, welche das jeweilige zweite Schienensegment 30b aufweist, im Folgenden mit dem Bezugszeichen 40b bezeichnet.

Wie Fig. 1 und 3 andeuten, umfasst jede der Massverkörperungen 40a bzw. 40b zumindest eine sich in Richtung der Längsachse 31 der linearen Schiene 30 erstreckende erste Inkrementalspur 41.1 mit einer Mehrzahl von äquidistant angeordneten Positionsmarkierungen. Die einzelnen Positionsmarkierungen der jeweiligen ersten Inkrementalspur 41.1 sind in Fig. 1 und 3 als gerade, senkrecht zur Längsachse 31 ausgerichtete und identisch geformte linienförmige Markierungen ausgebildet, welche in Richtung der Längsachse 31 hintereinander angeordnet sind, sodass sie eine sich in Richtung der Längsachse 31 erstreckende periodische Anordnung mit einer Periodenlänge d1 (entsprechend dem Abstand von zwei benachbarten Positionsmarkierungen der Inkrementalspur) bilden.

Ausserdem umfasst die Massverkörperung 40a des ersten Schienensegments 30a neben der ersten Inkrementalspur 41.1 eine Absolutspur 45 mit einer Mehrzahl von Positionsmarkierungen zur Kodierung von mehreren vorgegebenen absoluten Positionen, welche in Richtung der Längsachse 31 hintereinander liegen. Die einzelnen Positionsmarkierungen der Absolutspur 45 der Massverkörperung 40a sind in Fig. 1 und 3 als gerade, senkrecht zur Längsachse 31 ausgerichtete und identisch geformte linienförmige Markierungen dargestellt, welche in Richtung der Längsachse 31 derart hintereinander angeordnet sind, dass sie - im Unterschied zu den Positionsmarkierungen der jeweiligen Inkrementalspur 41.1 - keine periodische Anordnung bilden. Mit anderen Worten: die Positionsmarkierungen der Absolutspur 45 sind entlang der Längsachse 31 in unregelmässigen Abständen hintereinander angeordnet. Hierbei kodiert jeweils eine bestimmte Gruppe von mehreren Positionsmarkierungen, welche eine vorgegebene Anzahl von benachbarten Positionsmarkierungen (beispielsweise zwei, drei, vier oder mehr Positionsmarkierungen, welche in der Richtung der Längsachse 31 unmittelbar aufeinanderfolgend angeordnet sind) umfasst, eine vorgegebene absolute Position mit Bezug auf das erste Schienensegment 30a, wobei die jeweiligen Positionsmarkierungen dieser Gruppe in Abständen zueinander angeordnet sind, welche die eine vorgegebene absolute Position mit Bezug auf das erste Schienensegment 30a eindeutig kennzeichnen. Um mehrere vorgegebene absolute Positionen, welche in Richtung der Längsachse 31 hintereinander liegen, eindeutig zu kennzeichnen, enthält die Absolutspur 45 der Massverkörperung 40a eine Mehrzahl verschiedener Gruppen von mehreren Positionsmarkierungen, wobei jede dieser Gruppen eine vorgegebene Anzahl von benachbarten Positionsmarkierungen (beispielsweise zwei, drei, vier oder mehr Positionsmarkierungen, welche in der Richtung der Längsachse 31 unmittelbar aufeinanderfolgend angeordnet sind) umfasst, welche jeweils eine der vorgegebenen absoluten Positionen kodieren, sodass verschiedene dieser Gruppen jeweils verschiedenen vorgegebenen absoluten Positionen zugeordnet sind, wobei die jeweiligen Positionsmarkierungen einer bestimmten Gruppe in vorgegebenen Abständen zueinander angeordnet sind, welche diejenige vorgegebene absolute Position mit Bezug auf das erste Schienensegment 30a eindeutig kennzeichnen, die der jeweiligen Gruppe zugeordnet ist. Hinsichtlich des vorliegenden Beispiels gemäss Fig. 1 und 3 ist angenommen, dass die Absolutspur 45 eine Anzahl n ("n" bezeichnet hier eine beliebige natürliche Zahl mit n>1) von vorgegebenen absoluten Positionen AP1 bis APn kodiert, welche vorzugsweise über die gesamte Länge des Schienensegments 30a verteilt angeordnet sind. Der Einfachheit halber sind in Fig. 1 lediglich zwei dieser vorgegebenen absoluten Positionen, AP1 und APn, dargestellt. Wie ersichtlich, sind die absoluten Positionen AP1 und APn im vorliegenden Beispiel einander gegenüberliegenden Enden der Absolutspur 45 zugeordnet, wobei diejenigen Positionsmarkierungen der Absolutspur 45, welche Kodierungen der absoluten Positionen AP1 und APn bilden, in Fig. 1 nicht spezifisch gekennzeichnet sind.

Die jeweiligen Massverkörperungen 40a und 40b sind grundsätzlich auf der Grundlage konventioneller Technologien realisierbar, welche geeignet sind, an den jeweiligen Schienensegmenten Positionsmarkierungen bereitzustellen, welche mittels Sensoren detektiert werden können. Die einzelnen Positionsmarkierungen der Inkrementalspur 41.1 und der Absolutspur 45 können beispielsweise als Strukturen ausgebildet sein, welche mit optischen Mitteln (z.B. optischen Sensoren) detektierbar sind. Alternativ können die einzelnen Positionsmarkierungen der Inkrementalspur 41.1 und der Absolutspur 45 beispielsweise als magnetische Strukturen ausgebildet sein, welche mit entsprechenden, hinsichtlich der magnetischen Strukturen sensitiven Mitteln detektierbar sind (beispielsweise mit Sensoren zum Messen eines magnetischen Feldes an der jeweiligen magnetischen Struktur oder Sensoren zur Messung einer Magnetisierung in der jeweiligen magnetischen Struktur).

Wie aus Fig. 2 und 3 ersichtlich, umfasst die Abtasteinrichtung 50 eine Sensoranordnung 51 zum Abtasten der Massverkörperungen 40a bzw. 40b. Die Sensoranordnung 51 umfasst mindestens einen ersten Sensor 51.1, einen zweiten Sensor 51.2 und einen dritten Sensor 51.3. Die Abtasteinrichtung 50 ist bezüglich der Schiene 30 derart geführt, dass sie in Richtung der Längsachse 31 entlang mehrerer der Schienensegmente 30a bzw. 30b der Schiene 30, vorzugsweise über die gesamte Länge der Schiene 30, linear bewegbar ist. Diese Bewegbarkeit der Abtasteinrichtung 50 ist in Fig. 3 durch einen mit dem Bezugszeichen 21 versehenen Doppelpfeil angedeutet.

Der erste Sensor 51.1, der zweite Sensor 51.2 und der dritte Sensor 51.3 sind in Abständen zueinander angeordnet, um zu erreichen, dass diese Sensoren gleichzeitig jeweils verschiedene, räumlich voneinander getrennte Bereiche der Massverkörperungen 40a bzw. 40b abtasten können. Die Sensoren 51.1, 51.2 und 51.3 können zu diesem Zweck räumlich zueinander beispielsweise an drei separaten Punkten angeordnet sein, welche die drei Eckpunkte eines Dreiecks bilden (Fig. 2 und 3).

Die Sensoren 51.1 und 51.2 dienen zum Abtasten der ersten Inkrementalspur 41.1 der Massverkörperungen 40a und 40b an den Schienensegmenten 30a und 30b. Der erste Sensor 51.1 ist insbesondere ausgebildet, mindestens eine Positionsmarkierung der ersten Inkrementalspur 41.1 eines der Schienensegmente 30a bzw. 30b zu detektieren (sofern der erste Sensor 51.1 bezüglich der zu detektierenden Positionsmarkierung geeignet positioniert ist) und ein erstes Signal S1 zu erzeugen, welches eine Information über eine Position der Abtasteinrichtung 50 relativ zu der mindestens einen, vom ersten Sensor 51.1 detektierten Positionsmarkierung enthält. Weiterhin ist der zweite Sensor 51.2 ebenfalls ausgebildet, mindestens eine Positionsmarkierung der ersten Inkrementalspur 41.1 eines der Schienensegmente 30a bzw. 30b zu detektieren (sofern der zweite Sensor 51.2 bezüglich der zu detektierenden Positionsmarkierung geeignet positioniert ist) und ein zweites Signal S2 zu erzeugen, welches eine Information über eine Position der Abtasteinrichtung 50 relativ zu der mindestens einen, vom zweiten Sensor 51.2 detektierten Positionsmarkierung enthält.

Wie aus Fig. 2 und 3 ersichtlich, sind der erste Sensor 51.1 und der zweite Sensor 51.2 in Richtung der Längsachse 31 relativ zueinander um eine vorbestimmte Distanz D versetzt angeordnet, sodass die Abtasteinrichtung 50 bezüglich je zwei benachbarten Schienensegmenten, d.h. bezüglich dem ersten Schienensegment 30a und dem an das Schienensegment 30a angrenzende zweite Schienensegment 30b oder bezüglich zwei benachbarten Schienensegmenten 30b, in eine Position bringbar ist, in welcher der erste Sensor 51.1 mindestens eine der Positionsmarkierungen der ersten Inkrementalspur 41.1 der Massverkörperung der einen der zwei benachbarten Schienensegmente detektiert und der zweite Sensor 51.2 mindestens eine der Positionsmarkierungen der ersten Inkrementalspur 41.1 der Massverkörperung der anderen der zwei benachbarten Schienensegmente detektiert.

Weiterhin ist der dritte Sensor 51.3 ausgebildet, die Absolutspur 45 der Massverkörperung 40a des einen ersten Schienensegments 30a abzutasten und ein drittes Signal S3 zu erzeugen, welches eine Information über eine Position der Abtasteinrichtung 50 relativ zu den vorgegebenen absoluten Positionen enthält.

Zur detaillierteren Erläuterung des vorstehend genannten Sachverhaltes zeigt Fig. 3 die Abtasteinrichtung 50 in zwei verschiedenen Positionen, in welche die Abtasteinrichtung 50 bringbar ist, wenn sie - bezüglich der Schiene 30 linear geführt - in Richtung der Längsachse 31 bewegt wird. In Fig. 3 ist beispielsweise die Abtasteinrichtung 50 - repräsentiert durch ein mittels einer durchgezogenen Linie dargestelltes Rechteck - dargestellt für den Fall, dass die Abtasteinrichtung 50 in eine (in Fig. 3 durch einen Pfeil markierte) Position P1 gebracht wurde, sodass sich die Abtasteinrichtung 50 in einem Bereich der linearen Schiene 30 befindet, in welchem ein Ende des ersten Schienensegments 30a an ein Ende des benachbarten zweiten Schienensegments 30b grenzt. In diesem Fall sind die Sensoren 51.1, 51.2 und 51.3 der Sensoranordnung 51 derart bezüglich der Massverkörperung 40a des ersten Schienensegments 30a und der Massverkörperung 40b des benachbarten zweiten Schienensegments 30b angeordnet, dass:
- sich der erste Sensor 51.1 an der ersten Inkrementalspur 41.1 der Massverkörperung 40a des ersten Schienensegments 30a befindet, sodass der erste Sensor 51.1 geeignet positioniert ist, um mindestens eine Positionsmarkierung der ersten Inkrementalspur 41.1 der Massverkörperung 40a detektieren zu können;
- sich der zweite Sensor 51.2 an der ersten Inkrementalspur 41.1 der Massverkörperung 40b des benachbarten zweiten Schienensegments 30b befindet, sodass der zweite Sensor 51.2 geeignet positioniert ist, um mindestens eine Positionsmarkierung der ersten Inkrementalspur 41.1 der Massverkörperung 40b des benachbarten zweiten Schienensegments 30b detektieren zu können;
- sich der dritte Sensor 51.3 an der Absolutspur 45 des ersten Schienensegments 30a befindet, sodass der dritte Sensor 51.3 geeignet positioniert ist, um mindestens eine Positionsmarkierung der Absolutspur 45 detektieren zu können.

In Fig. 3 ist ausserdem die Abtasteinrichtung 50 - repräsentiert durch ein mittels einer gestrichelten Linie dargestelltes Rechteck - dargestellt für den Fall, dass die Abtasteinrichtung 50 in eine (in Fig. 3 durch einen Pfeil markierte) Position P2 gebracht wurde, sodass sich die Abtasteinrichtung 50 in einem Bereich der linearen Schiene 30 befindet, in welchem ein Ende eines zweiten Schienensegments 30b an ein Ende eines anderen (benachbarten) zweiten Schienensegments 30b grenzt. In diesem Fall sind die Sensoren 51.1, 51.2 und 51.3 der Sensoranordnung 51 derart bezüglich der Massverkörperung 40b des einen zweiten Schienensegments 30b und der Massverkörperung 40b des anderen zweiten Schienensegments 30b angeordnet, dass:
- sich der erste Sensor 51.1 an der ersten Inkrementalspur 41.1 des einen zweiten Schienensegments 30b befindet, sodass der erste Sensor 51.1 geeignet positioniert ist, um mindestens eine Positionsmarkierung der ersten Inkrementalspur 41.1 des einen zweiten Schienensegments 30b detektieren zu können;
- sich der zweite Sensor 51.2 an der ersten Inkrementalspur 41.1 des anderen (benachbarten) zweiten Schienensegments 30b befindet, sodass der zweite Sensor 51.2 geeignet positioniert ist, um mindestens eine Positionsmarkierung der ersten Inkrementalspur 41.1 des anderen zweiten Schienensegments 30b detektieren zu können;
- sich der dritte Sensor 51.3 derart entfernt von der Absolutspur 45 des ersten Schienensegments 30a befindet, dass der dritte Sensor 51.3 nicht geeignet positioniert ist, um eine Positionsmarkierung der Absolutspur 45 detektieren zu können.

Abweichend von den vorstehend genannten Positionen P1 und P2 kann die Abtasteinrichtung 50 an andere Positionen gebracht werden, an welchen sowohl der erste Sensor 51.1 als auch der zweite Sensor 51.2 jeweils an derselben ersten Inkrementalspur 41.1 derselben Massverkörperung 40a bzw. 40b eines der Schienensegmente 40a oder 40b angeordnet ist, sodass die Sensoren 51.1 und 51.2 geeignet platziert sind, um ausschliesslich Positionsmarkierungen derselben ersten Inkrementalspur 41.1 zu detektieren. Da die Sensoren 51.1 und 51.2 relativ zueinander um die Distanz D in Richtung der Längsachse 31 versetzt angeordnet sind, detektieren die Sensoren 51.1 und 51.2 in diesem Fall jeweils verschiedene, an verschiedenen Orten angeordnete Positionsmarkierungen, d.h. in der Regel verschiedene Positionsmarkierungen, welche in Richtung der Längsachse 31 relativ zueinander eine Distanz aufweisen, die in etwa der Distanz D entspricht.

Hinsichtlich der Erzeugung der vorstehend genannten Signale S1, S2 bzw. S3 wird in diesem Zusammenhang vorausgesetzt, dass jeder der Sensoren 51.1, 51.2 und 51.3 zum Detektieren von Positionsmarkierungen mindestens ein Sensorelement (bzw. optional mehrere Sensorelemente) umfasst, wobei jedes Sensorelement hinsichtlich einer zu detektierenden Positionsmarkierung sensitiv ist (zumindest wenn das Sensorelement in der Nähe der Positionsmarkierung platziert ist) und ausgebildet ist, ein Signal zu erzeugen, welches derart von der Anordnung des Sensorelements relativ zu der zu detektierenden Positionsmarkierung abhängt, dass ein vom Sensorelement erzeugbares Signal in Abhängigkeit von einem Abstand des Sensorelements relativ zu der zu detektierenden Positionsmarkierung variiert. Wird die Abtasteinrichtung 50 in Richtung der Längsachse 31 bewegt, variieren dementsprechend die von den Sensoren 51.1, 51.2 und 51.3 erzeugten Signale S1, S2 und S3 in Abhängigkeit von einer Ortskoordinate X, welche die jeweilige Position der Abtasteinrichtung 50 relativ zu der linearen Schiene 30 in Richtung der Längsachse 31 kennzeichnet.

Die von den Sensoren 51.1 bzw. 51.2 erzeugten Signale S1 und S2 zeigen in der Regel eine periodische Variation als Funktion der Ortskoordinate X der Abtasteinrichtung 50, zumal die Positionsmarkierungen der ersten Inkrementalspur 41.1 periodisch (äquidistant) bezüglich der Längsachse 31 angeordnet sind. Die Signale S1 und S2 zeigen hierbei in der Regel im Wesentlichen denselben periodischen Signalverlauf als Funktion der Ortskoordinate X der Abtasteinrichtung 50 (zumindest unter der Voraussetzung, dass alle Positionsmarkierungen gleich ausgebildet sind und die Sensoren 51.1 und 51.2 hinsichtlich der Detektion einer Positionsmarkierung dieselben Eigenschaften haben). Dabei sind die Signale S1 und S2 mit Bezug auf einen vorgegebenen Zeitpunkt nicht notwendigerweise identisch, zumal die Sensoren 51.1 und 51.2 relativ zueinander im Abstand D mit Bezug auf die Längsachse 31 angeordnet sind und folglich der Signalverlauf des Signals S1 als Funktion der Ortskoordinate X im Vergleich zum Signalverlauf des Signals S2 als Funktion der Ortskoordinate X eine Phasendifferenz aufweisen muss. Letzteres trifft selbst dann zu, wenn die Sensoren 51.1 und 51.2 beide an derselben ersten Inkrementalspur 41.1 derselben Massverkörperung 40a bzw. 40b angeordnet sind. Dabei ist die vorstehend genannte Phasendifferenz zwischen den Signalen S1 und S2 umso grösser, je grösser der Abstand D im Verhältnis zur Periodenlänge d1 der ersten Inkrementalspur 41.1 ist.

Weiterhin ist zu berücksichtigen, dass zwar alle Positionsmarkierungen, welche zu derselben ersten Inkrementalspur 41.1 derselben Massverkörperung 40a bzw. 40b desselben Schienensegments 30a bzw. 30b gehören, periodisch mit der Periodenlänge d1 angeordnet sind, dass jedoch die Periodizität der Anordnung der Positionsmarkierungen in einem Bereich der Schiene 30 "gestört" sein, im welchem eines der Schienensegmente 30a bzw. 30b an ein benachbartes Schienensegment 30a bzw. 30b grenzt.

Dadurch, dass die lineare Schiene 30 aus mehreren einzelnen Schienensegmenten 30a bzw. 30b zusammengesetzt ist und dementsprechend mehrere Massverkörperungen 40a bzw. 40b mit jeweils einer ersten Inkrementalspur 41.1 in Richtung der Längsachse 31 hintereinander angeordnet sind, sind nämlich in der Regel zwei benachbarte erste Inkrementalspuren 41.1 (d.h. die an einem der benachbarten Schienensegmente ausgebildete erste Inkrementalspur 41.1 und die an dem anderen der benachbarten Schienensegmente ausgebildete erste Inkrementalspur 41.1) relativ zueinander derart angeordnet, dass ein Ende einer der zwei benachbarten ersten Inkrementalspuren 41.1 an ein Ende der anderen der zwei benachbarten ersten Inkrementalspuren 41.1 grenzt. Bei einer Montage der einzelnen Schienensegmente besteht hinsichtlich der jeweiligen Positionen, an welchen die einzelnen Schienensegmente befestigt werden, in der Regel ein gewisses Spiel (innerhalb bestimmter Toleranzen). Infolgedessen kann - abhängig von der Anordnung zweier benachbarter Schienensegmente relativ zueinander - ein Ende einer von zwei benachbarten ersten Inkrementalspuren 41.1 derart an ein Ende der anderen der zwei benachbarten ersten Inkrementalspuren 41.1 grenzen, dass die Positionsmarkierung, welche das Ende der einen der zwei benachbarten ersten Inkrementalspuren 41.1 bildet, relativ zu der Positionsmarkierung, welche das Ende der anderen der zwei benachbarten Schienensegmente bildet, in Richtung der Längsachse 31 einen Abstand aufweist, welcher sich mehr oder weniger von der Periodenlänge d1 der ersten Inkrementalspur 41.1 unterscheidet.

Falls der Sensor 51.1 unter diesen Umständen in Längsrichtung der Schiene 30 von einem der zwei benachbarten Schienensegmente zu dem anderen der zwei benachbarten Schienensegmente bewegt wird, erzeugt der Sensor 51.1 beim Abtasten der jeweiligen ersten Inkrementalspur 41.1 ein Signal S1, welches als Funktion der Ortskoordinate X eine periodische Variation (bzw. einen periodischen Signalverlauf) mit der Periodenlänge d1 aufweist, und zwar zumindest für die Bereiche der Ortskoordinate X, welche entweder einer Anordnung des Sensors 51.1 im Bereich der einen der zwei benachbarten ersten Inkrementalspuren 41.1 oder einer Anordnung des Sensors 51.1 im Bereich der anderen der zwei benachbarten ersten Inkrementalspuren 41.1 entsprechen. Beim Übergang von dem einen Ende der ersten Inkrementalspur 41.1 des einen der zwei benachbarten Schienensegmente zu dem einen Ende der ersten Inkrementalspur 41.1 des anderen der zwei benachbarten Schienensegmente kann jedoch das Signal S1 als Funktion der Ortskoordinate X eine abrupte Signaländerung aufweisen, welche mit einem Phasensprung beim Übergang von der einen ersten Inkrementalspur 41.1 zu der benachbarten ersten Inkrementalspur 41.1 korrespondiert. Dieser Phasensprung im Signalverlauf des Signals S1 ist jeweils umso grösser, je mehr sich der Abstand zwischen der Positionsmarkierung, welche das Ende der einen der zwei benachbarten ersten Inkrementalspuren 41.1 bildet, und der Positionsmarkierung, welche das Ende der anderen der zwei benachbarten ersten Inkrementalspuren 41.1 bildet, in Richtung der Längsachse 31 von der Periodenlänge d1 der ersten Inkrementalspur 41.1 unterscheidet.

Das vom zweiten Sensor 51.2 erzeugte Signal S2 zeigt eine entsprechende Abhängigkeit von der Ortskoordinate X analog zur Abhängigkeit des Signals S1 von der Ortskoordinate X.

Falls der Sensor 51.2 unter diesen Umständen in Längsrichtung der Schiene 30 von einem der zwei benachbarten Schienensegmente zu dem anderen der zwei benachbarten Schienensegmente bewegt wird, erzeugt der Sensor 51.2 beim Abtasten der jeweiligen ersten Inkrementalspur 41.1 ein Signal S1, welches als Funktion der Ortskoordinate X eine periodische Variation (bzw. einen periodischen Signalverlauf) mit der Periodenlänge d1 aufweist, und zwar zumindest für die Bereiche der Ortskoordinate X, welche entweder einer Anordnung des Sensors 51.2 im Bereich der einen der zwei benachbarten ersten Inkrementalspuren 41.1 oder einer Anordnung des Sensors 51.2 im Bereich der anderen der zwei benachbarten ersten Inkrementalspuren 41.1 entsprechen. Beim Übergang von dem einen Ende der ersten Inkrementalspur 41.1 des einen der zwei benachbarten Schienensegmente zu dem einen Ende der ersten Inkrementalspur 41.1 des anderen der zwei benachbarten Schienensegmente kann jedoch das Signal S2 als Funktion der Ortskoordinate X eine abrupte Signaländerung aufweisen, welche mit einem Phasensprung im Verlauf des Signals S2 als Funktion der Ortskoordinate X beim Übergang von der einen ersten Inkrementalspur 41.1 zu der benachbarten ersten Inkrementalspur 41.1 korrespondiert. Dieser Phasensprung im Verlauf des Signals S2 als Funktion der Ortskoordinate X ist jeweils umso grösser, je mehr sich der Abstand zwischen der Positionsmarkierung, welche das Ende der einen der zwei benachbarten ersten Inkrementalspuren 41.1 bildet, und der Positionsmarkierung, welche das Ende der anderen der zwei benachbarten ersten Inkrementalspuren 41.1 bildet, in Richtung der Längsachse 31 von der Periodenlänge d1 der ersten Inkrementalspur 41.1 unterscheidet.

Wie oben im Zusammenhang mit Fig. 3 erläutert ist, sind die Sensoren 51.1 und 51.2 der Sensoranordnung 51 der Abtasteinrichtung 50 relativ zu den Schienensegmenten der linearen Schiene 30 jeweils derart angeordnet, dass - abhängig von der Position der Abtasteinrichtung 50 relativ zu den jeweiligen Schienensegmenten - entweder einer der Sensoren 51.1 oder 51.2 oder beide Sensoren 51.1 und 51.2 geeignet platziert ist bzw. platziert sind, jeweils eine Positionsmarkierung einer ersten Inkrementalspur 41.1 an zumindest einem der Schienensegmente zu detektieren und dementsprechend das Signal S1 und/oder das Signal S2 zu erzeugen. Sollte der Sensor 51.1 (oder alternativ der Sensor 51.2) am Übergang von einem Ende der ersten Inkrementalspur 41.1 eines von zwei benachbarten Schienensegmenten zu dem einen Ende der ersten Inkrementalspur 41.1 des anderen der zwei benachbarten Schienensegmente temporär derart positioniert sein, dass er keine Positionsmarkierung einer der ersten Inkrementalspuren 41.1 detektieren und dementsprechend kein Signal S1 (oder alternativ kein Signal S2) erzeugen kann, ist jederzeit gewährleistet, dass der andere Sensor 51.2 (oder alternativ der Sensor 51.1) gerade derart platziert ist, dass er eine Positionsmarkierung einer der ersten Inkrementalspuren 41.1 detektieren und dementsprechend ein Signal S2 (oder alternativ ein Signal S1) erzeugen kann.

Da ferner sowohl das Signal S1 als auch das Signal S2 als Funktion der Ortskoordinate X zumindest für bestimmte Bereiche der Ortskoordinate X jeweils einen periodischen Signalverlauf mit der Periodenlänge d1 der ersten Inkrementalspur 41.1 zeigen, ermöglicht eine Messung der beiden Signale S1 und S2 bei einer Bewegung in Richtung der Längsachse 31, die jeweiligen Änderungen der gemessenen Signale S1 und S2 auszuwerten und daraus eine relative Änderung der Position der Abtasteinrichtung 50 in Richtung der Längsachse 31 während der Bewegung (entsprechend der Länge der von der Abtasteinrichtung 50 zurückgelegten Strecke) bzw. die Positionsdifferenz PD zwischen der Position der Abtasteinrichtung 50 zu Beginn der Bewegung und der Position der Abtasteinrichtung 50 an einem beliebigen späteren Zeitpunkt nach dem Beginn der Bewegung zu bestimmen.

Es sei darauf hingewiesen, dass eine Auswertung der Signale S1 und S2 auf besonders einfache Weise durchgeführt werden kann, wenn die Wegmessvorrichtung 10 derart ausgelegt ist, dass weder der Verlauf des Signals S1 noch der Verlauf des Signals S2 als Funktion der Ortskoordinate X der Abtasteinrichtung 50 bei einem Übergang des Sensors 51.1 bzw. des Sensors 51.2 von dem einen Ende der ersten Inkrementalspur 41.1 des einen von zwei benachbarten Schienensegmenten zu dem einen Ende der ersten Inkrementalspur 41.1 des anderen der zwei benachbarten Schienensegmente keinen Phasensprung aufweist, welcher mit einer abrupten Änderung des Signals S1 bzw. des Signals S2 verbunden wäre. Um einen derartigen Phasensprung zu vermeiden, ist es beispielsweise möglich, bei einer Montage der einzelnen Schienensegmente dafür zu sorgen, dass der Abstand zwischen der Positionsmarkierung, welche das Ende der einen der zwei benachbarten ersten Inkrementalspuren 41.1 bildet, und der Positionsmarkierung, welche das Ende der anderen der zwei benachbarten Schienensegmente bildet, in Richtung der Längsachse 31 entweder gleich der Periodenlänge d1 der ersten Inkrementalspur 41.1 oder gleich einem Vielfachen der Periodenlänge d1 ist.

Eine Auswertung der Signale S1 und S2 kann zusätzlich vereinfacht werden, wenn der Abstand D der Sensoren 51.1 und 51.2 in Richtung der Längsachse 31 derart gewählt wird, dass der Abstand D gleich der Periodenlänge d1 der ersten Inkrementalspur 41.1 oder gleich einem Vielfachen der Periodenlänge d1 ist. In diesem Fall weisen die Signale S1 und S2 als Funktion der Ortskoordinate X der Abtasteinrichtung 50 relativ zueinander einen Phasenunterschied auf, welche derart gross ist, dass die Signale S1 und S2 denselben Verlauf als Funktion der Ortskoordinate X der Abtasteinrichtung 50 aufweisen. In diesem Fall ist, sofern beide Signale S1 und S2 gleichzeitig zur Verfügung stehen, eines der beiden Signale S1 bzw. S2 redundant.

Wie Fig. 3 weiterhin andeutet, umfasst die Wegmessvorrichtung 10 zur Auswertung der von den Sensoren 51.1, 51.2 und 51.3 erzeugbaren Signale eine erste Auswerteeinrichtung 60 für ein vom dritten Sensor 51.3 erzeugbares drittes Signal S3 und eine zweite Auswerteeinrichtung 65 für ein vom ersten Sensor 51.1 erzeugbares erstes Signal S1 und ein vom zweiten Sensor 51.2 erzeugbares zweites Signal S2. Die erste Auswerteeinrichtung 60 steht dementsprechend mit dem dritten Sensor 51.3 in einer Verbindung, um ein vom dritten Sensor 51.3 erzeugtes Signal S3 empfangen zu können. Weiterhin steht die zweite Auswerteeinrichtung 65 mit dem ersten Sensor 51.1 und dem zweiten Sensor 51.2 in Verbindung, um ein vom ersten Sensor 51.1 erzeugtes Signal S1 und ein vom zweiten Sensor 51.2 erzeugtes Signal S2 empfangen zu können.

Bei einer ersten Inbetriebnahme der Wegmessvorrichtung 10 muss die Abtasteinrichtung 50 zunächst bezüglich dem ersten Schienensegment 30a derart positioniert sein bzw. (gegebenenfalls mittels einer Bewegung der Abtasteinrichtung 50 in Richtung der Längsachse 31) positioniert werden, dass der dritte Sensor 51.3 zumindest einen Abschnitt der Absolutspur 45 der Massverkörperung 40a des ersten Schienensegments 30a abtasten kann, welcher zumindest diejenigen Positionsmarkierungen enthält, die eine der vorgegebenen absoluten Positionen AP1 bis APn kodiert, sodass der dritte Sensor 51.3 diejenigen Positionsmarkierungen detektieren kann, welche die eine der vorgegebenen absoluten Positionen kodiert. Zu diesem Zweck kann die Abtasteinrichtung 50 beispielsweise entlang eines Abschnitts der Absolutspur 45 in der Richtung der Längsachse 31 bewegt werden, wobei gleichzeitig die erste Auswerteeinrichtung 60 das vom dritten Sensor 51.3 erzeugte Signal S3 auswertet und die zweite Auswerteeinrichtung 65 das vom ersten Sensor 51.1 erzeugte Signal S1 und das vom zweiten Sensor S2 erzeugte Signal S2 auswertet. Die zweite Auswerteeinrichtung 65 ist dabei ausgebildet, die relative Veränderung der Ortskoordinate X der Abtasteinrichtung 50 während der Bewegung zu registrieren, während die erste Auswerteeinrichtung 60 ausgebildet ist, eine Änderung des Signals S3 während der relativen Veränderung der Ortskoordinate X der Abtasteinrichtung 50 zu registrieren und auszuwerten. Die jeweils während der relativen Veränderung der Ortskoordinate X registrierte Änderung des Signals S3 ist hierbei charakteristisch für die räumliche Anordnung derjenigen Positionsmarkierungen der Absolutspur 45, welche vom dritten Sensor 51.3 während der Bewegung der Abtasteinrichtung 50 detektiert wurden. Die registrierte Änderung des Signals S3 gibt demnach Auskunft darüber, ob die detektierten Positionsmarkierungen der Absolutspur 45 eine der vorgegebenen absoluten Positionen kodiert bzw. welche der vorgegebenen absoluten Positionen gegebenenfalls durch die vom dritten Sensor 51.3 detektierten Positionsmarkierungen kodiert sind.

Dementsprechend ist die erste Auswerteeinrichtung 60 ausgelegt, bei einer ersten Inbetriebnahme der Wegmessvorrichtung 10 anhand einer Auswertung des dritten Signals S3 zu detektieren, ob sich die Abtasteinrichtung 50 an einer der vorgegebenen absoluten Positionen AP1 bis APn bezüglich des ersten Schienensegments 30a befindet, und - falls eine Auswertung des dritten Signals S3 ergibt, dass sich die Abtasteinrichtung 50 an einem ersten Zeitpunkt t1 an einer der vorgegebenen absoluten Positionen bezüglich des einen der Schienensegmente 30a befindet - einen ersten Absolutwert AW1 zu ermitteln, welcher diese eine der vorgegebenen absoluten Positionen repräsentiert. Der Absolutwert AW1 kann beispielsweise einer Ortskoordinate der Abtasteinrichtung 50 entsprechen, welche der Position der Abtasteinrichtung 50 zum ersten Zeitpunkt t1 zugeordnet ist.

Hinsichtlich des in Fig. 3 dargestellten Beispiels wird im Folgenden angenommen, dass sich die Abtasteinrichtung 50 zum ersten Zeitpunkt t1 an der in Fig. 3 angegebenen Position P1 befindet und die Position P1 eine der vorgegebenen absoluten Positionen AP1 bis APn ist, sodass der von der ersten Auswerteeinrichtung 60 ermittelte erste Absolutwert AW1 der Position P1 gemäss Fig. 3 zugeordnet wäre. Im Anschluss an den Zeitpunkt t1 kann die Abtasteinrichtung 50 in jede beliebige Position im Bereich der linearen Schiene 30 gebracht werden, welche die Abtasteinrichtung bei einer Bewegung in Richtung der Längsachse 41 erreichen kann. Im Beispiel gemäss Fig. 3 wird beispielsweise angenommen, dass die Abtasteinrichtung 50 bis zu einem Zeitpunkt t2 in die angegebene Position P2 bewegt wurde.

Die Wegmessvorrichtung 10 ist derart ausgelegt, dass die zweite Auswerteeinrichtung 65 nach dem ersten Zeitpunkt t1 das erste Signal S1 und das zweite Signal S2 während eines ersten Zeitintervalls zwischen dem ersten Zeitpunkt t1 und dem zweiten Zeitpunkt t2 auswertet und aus den jeweiligen Änderungen der Signale S1 und S2 während dieses ersten Zeitintervalls eine Positionsdifferenz PD zwischen der Position P1 der Abtasteinrichtung 50 zu Beginn des ersten Zeitintervalls und der Position P2 der Abtasteinrichtung 50 zu dem zweiten Zeitpunkt t2 am Ende des ersten Zeitintervalls ermittelt. Die Positionsdifferenz PD entspricht der Differenz der Ortskoordinate der Abtasteinrichtung 50, welche der Position P2 zugeordnet, und der Ortskoordinate der Abtasteinrichtung 50, welche der Position P1 zugeordnet ist.

Wie Fig. 3 weiterhin andeutet, umfasst die Wegmessvorrichtung 10 eine Recheneinheit 70. Diese ist ausgebildet, aus dem ersten Absolutwert AW1 und der von der zweiten Auswerteeinrichtung 65 ermittelten Positionsdifferenz PD einen zweiten Absolutwert AW2 zu berechnen, welcher eine absolute Position der Abtasteinrichtung 50 zum zweiten Zeitpunkt t2 am Ende des ersten Zeitintervalls repräsentiert. Der zweite Absolutwert AW2 ist der Position P2 zugeordnet und definiert diese eindeutig.

Wird die Abtasteinrichtung 50 nach dem Zeitpunkt t2 an eine andere, von P2 verschiedene Position bewegt, dann wertet die zweite Auswerteeinrichtung 65 die Signale S1 und S2 bzw. Änderungen der Signale S1 und S2 weiter aus, um die "aktuelle" Positionsdifferenz PD zu bestimmen, welche diese andere Position von der Position P1 zum Zeitpunkt t1 unterscheidet. Entsprechend ist die Recheneinheit 70 ausgebildet, einen "aktuellen" zweiten Absolutwert AW2 zu berechnen, welcher diese andere Position eindeutig kennzeichnet. Auf diese Weise ist gewährleistet, dass die Recheneinheit 70 an jedem beliebigen Zeitpunkt nach dem Zeitpunkt t1 einen zweiten Absolutwert AW2 bereitstellt, welcher der Position entspricht, an welcher sich die Abtasteinrichtung 50 an dem jeweiligen Zeitpunkt befindet. Zum Zeitpunkt t1 ist der zweite Absolutwert AW2 offensichtlich identisch mit dem ersten Absolutwert AW1, da zu diesem Zeitpunkt die Positionsdifferenz PD gleich 0 ist.

Wie Fig. 3 andeutet, weist die Recheneinheit 70 eine Ausgabeschnittstelle 71 auf, über welche der zweite Absolutwert AW2 ausgebbar ist, beispielsweise an eine (nicht dargestellte) Anzeigevorrichtung zur Anzeige der jeweiligen absoluten Position der Abtasteinrichtung 50 und/oder an eine nicht dargestellte) Steuereinrichtung zur Steuerung einer Maschine in Abhängigkeit von der jeweiligen absoluten Position der Abtasteinrichtung 50.

Wie Fig. 1 und 3 weiter andeuten, kann (optional) die Massverkörperung 40b eines zweiten Schienensegments 30b oder mehrerer Schienensegmente 30b oder jedes der Schienensegmente 30b eine zweite Inkrementalspur 41.2 aufweisen, welche sich neben der ersten Inkrementalspur 41.1 der jeweiligen Massverkörperung 40b in Richtung der Längsachse 31 erstreckt und eine Mehrzahl von äquidistant angeordneten Positionsmarkierungen aufweist. Die Positionsmarkierungen der jeweiligen zweiten Inkrementalspur 41.2 sind in Richtung der Längsachse 31 hintereinander derart angeordnet, dass sie eine sich in Richtung der Längsachse 31 erstreckende periodische Anordnung mit einer Periodenlänge d2 (entsprechend dem Abstand von zwei benachbarten Positionsmarkierungen der Inkrementalspur 41.2) bilden. Die jeweilige zweite Inkrementalspur 41.2 ist relativ zum dritten Sensor 51.3 der Abtasteinrichtung 50 derart angeordnet, dass sie mittels des dritten Sensors 51.3 abtastbar ist und die Positionsmarkierungen der zweiten Inkrementalspur 41.2 mittels des dritten Sensors 51.3 detektierbar sind (sofern die Abtasteinrichtung 50 bezüglich der jeweiligen zweiten Inkrementalspur 41.2 entsprechend positioniert ist).

Die einzelnen Positionsmarkierungen der zweiten Inkrementalspur 41.2 können auf dieselbe Weise wie die Positionsmarkierungen der ersten Inkrementalspur 41.1 realisiert sein, wobei sich die Periodenlänge d2 der zweiten Inkrementalspur 41.2 von der Periodenlänge d1 der ersten Inkrementalspur 41.1 unterscheiden kann.

Der dritte Sensor 51.3 erzeugt im vorliegenden Beispiel beim Abtasten der jeweiligen zweiten Inkrementalspur 41.2 ein viertes Signal S4, welches bei einer Bewegung der Abtasteinrichtung 50 in Richtung der Längsachse 31 entlang der jeweiligen zweiten Inkrementalspur 41.2 als Funktion der Ortskoordinate X der Abtasteinrichtung 50 eine periodische Variation (bzw. einen periodischen Signalverlauf) mit der Periodenlänge d2 aufweist.

Die erste Auswerteeinrichtung 60 steht mit dem dritten Sensor 51.3 in Verbindung, um ein vom dritten Sensor erzeugtes Signal S4 empfangen und auswerten zu können. Die erste Auswerteeinrichtung 60 ist insbesondere ausgebildet, Änderungen des vierten Signals S4 bei einer Bewegung der Abtasteinrichtung 50 in Richtung der Längsachse 31 zu registrieren und mit einer Positionsveränderung der Abtasteinrichtung 50 zu korrelieren. Weiterhin ist die Recheneinheit 70 ausgebildet ist, das vierte Signal S4 mit dem ersten Signal S1 und/oder dem zweiten Signal S2 zu vergleichen. Die Recheneinheit 70 ist insbesondere ausgebildet, eine bei einer Positionsveränderung der Abtasteinrichtung 50 erzeugte Änderung des vierten Signals S4 mit entsprechenden Änderungen des ersten Signals S1 und/oder des zweiten Signals S2 zu vergleichen. Ein derartiger Vergleich des Signals S4 mit dem Signal S1 und/oder dem Signal S2 ermöglicht eine Kontrolle, ob die Änderungen der Signale S1, S2 und S4 innerhalb vorgegebener Toleranzen mit einer bestimmten Positionsveränderung der Abtasteinrichtung 50 korrespondieren, und liefert deshalb einen Hinweis, ob die Abtasteinrichtung 50 erwartungsgemäss funktioniert.

Um eine möglichst genaue Messung einer Positionsänderung der Abtasteinrichtung 50 in Richtung der Längsachse 31 zu ermöglichen, ist es vorteilhaft, für die Periodenlänge d1 der ersten Inkrementalspur 41.1 einen möglichst kleinen Wert vorzugebenen. Für die Periodenlänge d2 der zweiten Inkrementalspur 41.2 kann zweckmässigerweise d2 > d1 gelten, zumal unter diesen Umständen eine Kontrolle der Funktionsfähigkeit der Abtasteinrichtung 50 mit hinreichender Genauigkeit möglich ist.

Die Periodenlänge d2 der zweiten Inkrementalspur 41.2 kann demensprechend unabhängig von d1 frei vorgegeben werden. Um eine einfache Kontrolle der Funktionsfähigkeit der Abtasteinrichtung 50 zu gewährleisten, kann d2 beispielsweise gleich einem Vielfachen von d1 sein. Für die in Fig. 1 und 3 dargestellte zweite Inkrementalspur 41.2 gilt beispielsweise d2= 2 × d1.

Die Periodenlänge d2 kann beispielsweise so gewählt werden, dass d2 mit einem oder mehreren charakteristischen Parametern der Wegmessvorrichtung 10 korreliert ist, beispielsweise mit einer "Baugrösse" des jeweiligen Schienensegments 30b (charakterisiert durch die Länge, Höhe und/oder Breite des Schienensegments 30b) oder eine Kennzeichnung einer bestimmten Ausführungsform der Wegmessvorrichtung 10 (sofern die Wegmessvorrichtung 10 in verschiedenen Ausführungsformen bereitstellbar ist) .

Die Absolutspur 45 des Schienensegments 30a umfasst im Beispiel gemäss Fig. 1 bzw. 3 eine erste Kodierung 46, welche eine Information über den (bzw. die) vorstehend genannten charakteristischen Parameter der Wegmessvorrichtung 10 enthält. Die ersten Kodierung 46 ist hierbei als eine bestimmte (im vorliegenden Beispiel an einem Ende der Absolutspur 45 platzierte) Anordnung von mehreren Positionsmarkierungen der Absolutspur 45 realisiert und ist dementsprechend mittels des dritten Sensors 51.3 abtastbar und dementsprechend detektierbar und mittels der ersten Auswerteeinrichtung 60 auswertbar.

Nach einer ersten Abtastung der ersten Kodierung 46 kann demnach die erste Auswerteeinrichtung 60 die jeweiligen charakteristischen Parameter der Wegmessvorrichtung 10 ermitteln. Sobald die Abtasteinrichtung 50 anschliessend bei einer Bewegung in Richtung der Längsachse 31 in die Lage versetzt wird, die zweite Inkrementalspur 41.2 eines der zweiten Schienensegmente 30b abzutasten, kann die erste Auswerteeinrichtung 60 das von dem dritten Sensor erzeugte vierte Signals S4 auswerten und aus einer Änderung des Signals als Funktion der Ortskoordinate X der Abtasteinrichtung 50 die Periodenlänge d2 der zweiten Inkrementalspur 41.2 ermitteln. Auf diese Weise ist die erste Auswerteeinrichtung 60 in der Lage zu kontrollieren, ob die ermittelte Periodenlänge d2 der zweiten Inkrementalspur 41.2 des jeweiligen zweiten Schienensegments 30b mit der in der Absolutspur 45 enthaltenen ersten Kodierung 46 kompatibel ist oder nicht.

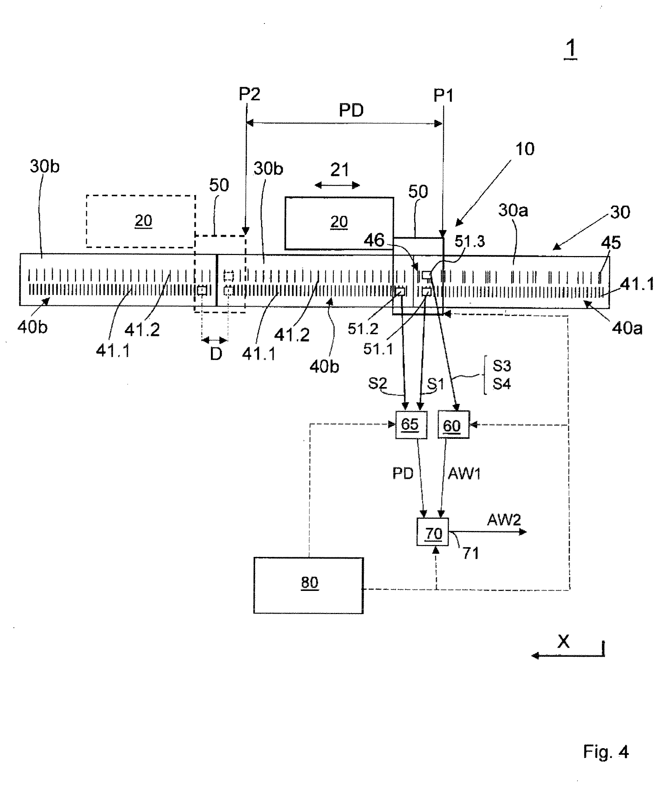

Mit Bezug auf Fig. 4 wird im Folgenden eine Ausführungsform einer erfindungsgemässen Linearführung für einen bewegbaren Körper erläutert. Die Fig. 4 zeigt - in einer schematischen Darstellung - eine Linearführung 1, welche einen bewegbaren Körper 20 und eine lineare Wegmessvorrichtung 10 gemäss Fig. 3 umfasst. In Fig. 3 und 4 sind demensprechend gleiche bzw. gleichwirkende Teile jeweils mit gleichen Bezugszeichen bezeichnet. Die Linearführung 1 weist insbesondere dieselbe lineare Schiene 30 auf wie die Wegmessvorrichtung 10 gemäss Fig. 3.

Der bewegbare Körper 20 der Linearführung 1 ist über (nicht dargestellte) Wälzkörper an der linearen Schiene 30 gestützt, sodass die Wälzkörper eine geführte lineare Bewegung des bewegbaren Körpers 20 in Längsrichtung der linearen Schiene 30 (d.h. in Richtung der in Fig. 1 dargestellten Längsachse 31) ermöglichen. Eine Abtasteinrichtung 50 der linearen Wegmessvorrichtung 10 gemäss Fig. 3 ist am bewegbaren Körper 20 angeordnet, sodass die Abtasteinrichtung 50 bei einer Bewegung des bewegbaren Körpers 20 in Richtung der Längsachse 31 der linearen Schiene 30 mitbewegt wird und die Positionsmarkierungen der einzelnen Massverkörperungen 40a und 40b abtasten kann. Die Linearführung 1 ist hinsichtlich der Konstruktion und Funktion der Abtasteinrichtung 50, der ersten Auswerteeinrichtung 60, der zweiten Auswerteeinrichtung 65 und der Recheneinheit 70 jeweils identisch mit der Wegmessvorrichtung 10 gemäss Fig. 3. Dementsprechend muss der bewegbare Körper 20 bei einer ersten Inbetriebnahme der Linearführung 1 zunächst bezüglich des ersten Schienensegments 30a derart positioniert werden, dass der dritte Sensor 51.3 zumindest Positionsmarkierungen der Absolutspur 45 detektieren kann, welche eine der vorgegebenen absoluten Positionen AP1 bis APn kodieren, und die Auswerteeinrichtung den ersten Absolutwert AW1 ermitteln kann, welcher der vorgegebenen absoluten Position entspricht, die mittels der detektierten Positionsmarkierungen kodiert ist. Jede Positionsveränderung des bewegbaren Körpers 20 in der Richtung der Längsachse 31 wird von der zweiten Auswerteeinrichtung 65 mittels einer Auswertung der von den Sensoren 51.1 und 51.2 erzeugten Signale S1 und S2 ermittelt. Entsprechend stellt die Recheneinheit 70 einen zweiten Absolutwert AW2 bereit, welcher der Position entspricht, an welcher sich die Abtasteinrichtung 50 bzw. der bewegbare Körper 20 jeweils befindet. In Fig. 4 sind der bewegbare Körper 20 und die Abtasteinrichtung 50 jeweils in zwei verschiedenen Positionen dargestellt: für den Fall, dass sich die Abtasteinrichtung 50 an der Position P1 befindet, und für den Fall, dass sich die Abtasteinrichtung 50 an der Position P2 befindet (analog zu Fig. 3).

Die Linearführung 1 gemäss Fig. 4 kann als Ganzes Teil einer Maschine sein, welche beispielsweise einen (in Fig. 3 nicht dargestellten) elektrischen Antriebsmotor zum Bewegen des bewegbaren Körpers 20, eine (in Fig. 3 nicht dargestellte) Maschinensteuerung zum Ansteuern des elektrischen Antriebsmotors und gegebenenfalls anderer steuerbarer Komponenten der Maschine und eine Energieversorgungseinrichtung zur Versorgung des elektrischen Antriebsmotors, der anderen steuerbaren Komponenten der Maschine und/oder der Maschinensteuerung mit Energie umfasst, wobei die Maschinensteuerung ausgebildet ist, im Betrieb der Maschine den von der Recheneinheit 70 bereitgestellten zweiten Absolutwert AW2 zu empfangen und die Maschine in Abhängigkeit von dem zweiten Absolutwert AW2 zu steuern.

Die Abtasteinrichtung 50, die erste Auswerteeinrichtung 60, die zweite Auswerteeinrichtung 65 und/oder die Recheneinheit 70 umfassen elektronische Bauelemente und benötigen für ihren Betrieb eine Zufuhr von elektrischer Energie. Wie Fig. 4 andeutet, kann eine separate elektrische Energieversorgungseinrichtung 80 vorgesehen sein, welche ausgebildet ist, nach einer ersten Inbetriebnahme der linearen Wegmessvorrichtung 10 bzw. der Linearführung 1 eine unterbrechungsfreie Zufuhr von elektrischer Energie an die Abtasteinrichtung 50, die erste Auswerteeinrichtung 60, die zweite Auswerteeinrichtung 65 und/oder die Recheneinheit 10 zu ermöglichen, und zwar unabhängig von einer Versorgung des elektrischen Antriebsmotors, der anderen steuerbaren Komponenten der Maschine und/oder der Maschinensteuerung mit Energie.

Die separate elektrische Energieversorgungseinrichtung 80 gewährleistet, dass die Abtasteinrichtung 50, die erste Auswerteeinrichtung 60, die zweite Auswerteeinrichtung 65 und/oder die Recheneinheit 10 selbst dann funktionsfähig sind und dementsprechend einen der absoluten Position der Abtasteinrichtung 50 entsprechenden zweiten Absolutwert AW2 bereitstellen, falls der Betrieb der Maschine an sich unterbrochen wird, beispielsweise durch eine Unterbrechung der Versorgung des elektrischen Antriebsmotors, der anderen steuerbaren Komponenten der Maschine und/oder der Maschinensteuerung mit Energie. Wird der Betrieb der Maschine nach einer Wiederherstellung der Versorgung des elektrischen Antriebsmotors, der anderen steuerbaren Komponenten der Maschine und/oder der Maschinensteuerung mit Energie wieder fortgesetzt, ist die Recheneinheit 70 in der Lage, der Maschinensteuerung einen zweiten Absolutwert AW2 bereitzustellen, welcher der momentanen absoluten Position der Abtasteinrichtung 50 zum Zeitpunkt der Fortsetzung des Betriebs der Maschine entspricht. Letzteres ist zutreffend auch für den Fall, dass die Abtasteinrichtung 50 während der Unterbrechung der Versorgung des elektrischen Antriebsmotors, der anderen steuerbaren Komponenten der Maschine und/oder der Maschinensteuerung mit Energie in Richtung der Längsachse 31 bewegt wurde.

Alle zweiten Schienensegmente 30b (einschliesslich der an dem jeweiligen zweiten Schienensegment 30b vorhandenen Massverkörperung 40b) der Schiene 30 der Wegmessvorrichtung 10 bzw. der Linearführung 1 können identisch aufgebaut sein, um zu ermöglichen, dass mehrere zum Aufbau der Schiene 30 benötigte Schienensegmente 30b miteinander vertauschbar und/oder gegenseitig austauschbar sind.

## Patentansprüche

1. Lineare Wegmessvorrichtung (10) zum Bestimmen einer absoluten Position, welche umfasst:
a) eine lineare Schiene (30), welche eine Längsachse (31) aufweist und aus mehreren einzelnen Schienensegmenten (30a, 30b) zusammengesetzt ist, welche Schienensegmente in Richtung der Längsachse (31) hintereinander angeordnet sind,
wobei jedes der Schienensegmente (30a, 30b) eine Massverkörperung (40a, 40b) aufweist, welche zumindest eine sich in Richtung der Längsachse (31) erstreckende erste Inkrementalspur (41.1) mit einer Mehrzahl von äquidistant angeordneten Positionsmarkierungen umfasst, und wobei die Massverkörperung (40a) eines der Schienensegmente (30a) neben der ersten Inkrementalspur (41.1) dieser Massverkörperung (40a) eine Absolutspur (45) mit einer Mehrzahl von Positionsmarkierungen zur Kodierung von mehreren vorgegebenen absoluten Positionen, welche in Richtung der Längsachse (31) hintereinander liegen, aufweist;
b) eine Abtasteinrichtung (50) mit einer Sensoranordnung (51) zum Abtasten der Massverkörperungen (40a, 40b), welche Sensoranordnung mindestens einen ersten Sensor (51.1), einen zweiten Sensor (51.2) und einen dritten Sensor (51.3) umfasst,
wobei die Abtasteinrichtung (50) bezüglich der Schiene (30) derart geführt ist, dass sie in Richtung der Längsachse (31) entlang mehrerer der Schienensegmente (30a, 30b) bewegbar ist, und
wobei der erste Sensor (51.1) ausgebildet ist, mindestens eine Positionsmarkierung der ersten Inkrementalspur (41.1) eines der Schienensegmente (30a, 30b) zu detektieren und ein erstes Signal (S1) zu erzeugen, welches eine Information über eine Position der Abtasteinrichtung (50) relativ zu der mindestens einen, vom ersten Sensor (51.1) detektierten Positionsmarkierung enthält,
wobei der zweite Sensor (51.2) ausgebildet ist, mindestens eine Positionsmarkierung der ersten Inkrementalspur (41.1) eines der Schienensegmente (30a, 30b) zu detektieren und ein zweites Signal (S2) zu erzeugen, welches eine Information über eine Position der Abtasteinrichtung (50) relativ zu der mindestens einen, vom zweiten Sensor (51.2) detektierten Positionsmarkierung enthält,
wobei der erste Sensor (51.1) und der zweite Sensor (51.2) in Richtung der Längsachse (31) relativ zueinander um eine vorbestimmte Distanz (D) versetzt angeordnet sind, sodass die Abtasteinrichtung (50) bezüglich je zwei benachbarten Schienensegmenten (30a, 30b) in eine Position (P1) bringbar ist, in welcher der erste Sensor (51.1) mindestens eine der Positionsmarkierungen der ersten Inkrementalspur (41.1) der Massverkörperung (40a) der einen der zwei benachbarten Schienensegmente (30a) detektiert und der zweite Sensor (51.2) mindestens eine der Positionsmarkierungen der ersten Inkrementalspur (41.1) der Massverkörperung (40b) der anderen der zwei benachbarten Schienensegmente (30b) detektiert,
wobei der dritte Sensor (51.3) ausgebildet ist, die Absolutspur (45) der Massverkörperung (40a) des einen der Schienensegmente (30a) abzutasten und ein drittes Signal (S3) zu erzeugen, welches eine Information über eine Position der Abtasteinrichtung (50) relativ zu den vorgegebenen absoluten Positionen enthält;
c) eine erste Auswerteeinrichtung (60) für das dritte Signal (S3), welche ausgebildet ist zu detektieren, ob sich die Abtasteinrichtung (50) an einer der vorgegebenen absoluten Positionen bezüglich des einen der Schienensegmente (30a) befindet, und - falls eine Auswertung des dritten Signals (S3) ergibt, dass sich die Abtasteinrichtung (50) an einem ersten Zeitpunkt an einer der vorgegebenen absoluten Positionen (P1) bezüglich des einen der Schienensegmente (30a) befindet - einen ersten Absolutwert (AW1) zu ermitteln, welcher diese eine der vorgegebenen absoluten Positionen (P1) repräsentiert;
d) eine zweite Auswerteeinrichtung (65) für das erste Signal (S1) und das zweite Signal (S2), welche ausgebildet ist, nach dem ersten Zeitpunkt das erste Signal und das zweite Signal während eines ersten Zeitintervalls zwischen dem ersten Zeitpunkt und einem zweiten Zeitpunkt auszuwerten und eine Positionsdifferenz (PD) zwischen der Position (P1) der Abtasteinrichtung (50) zu Beginn des ersten Zeitintervalls und einer Position (P2) der Abtasteinrichtung (50) zu dem zweiten Zeitpunkt am Ende des ersten Zeitintervalls zu ermitteln;
e) eine Recheneinheit (70), welche ausgebildet ist, aus dem ersten Absolutwert (AW1) und der von der zweiten Auswerteeinrichtung (65) ermittelten Positionsdifferenz (PD) einen zweiten Absolutwert (AW2) zu berechnen, welcher eine absolute Position der Abtasteinrichtung (50) zum zweiten Zeitpunkt am Ende des ersten Zeitintervalls repräsentiert,
wobei die Massverkörperung (40b) mindestens eines der Schienensegmente (30b) - mit Ausnahme des einen der Schienensegmente (30a), welches die Absolutspur (45) aufweist - eine zweite Inkrementalspur (41.2) umfasst, welche sich neben der ersten Inkrementalspur (41.1) dieses mindestens einen der Schienensegmente (30b) in Richtung der Längsachse (31) erstreckt und eine Mehrzahl von äquidistant angeordneten Positionsmarkierungen aufweist, und
die zweite Inkrementalspur (41.2) relativ zum dritten Sensor (51.3) der Abtasteinrichtung (50) derart angeordnet ist, dass die zweite Inkrementalspur (41.2) mittels des dritten Sensors (51.3) abtastbar ist und die Positionsmarkierungen der zweiten Inkrementalspur (41.2) mittels des dritten Sensors (51.3) detektierbar sind, und
der dritte Sensor (51.3) ausgebildet ist, beim Abtasten der zweiten Inkrementalspur (41.2) ein viertes Signal (S4) zu erzeugen, und
die Recheneinheit (70) ausgebildet ist, das vierte Signal (S4) mit dem ersten Signal (S1) und/oder dem zweiten Signal (S2) zu vergleichen.

2. Lineare Wegmessvorrichtung (10) gemäss Anspruch 1, wobei die Abtasteinrichtung (50), die erste Auswerteeinrichtung (60), die zweite Auswerteeinrichtung (65) und/oder die Recheneinheit (70) mittels einer Zufuhr von elektrischer Energie betreibbar sind und eine elektrische Energieversorgungseinrichtung (80) vorhanden ist, welche ausgebildet ist, nach dem ersten Zeitpunkt eine unterbrechungsfreie Zufuhr von elektrischer Energie an die Abtasteinrichtung, die erste Auswerteeinrichtung, die zweite Auswerteeinrichtung und/oder die Recheneinheit zu ermöglichen.

3. Lineare Wegmessvorrichtung (10) gemäss Anspruch 1 oder 2, wobei zwei benachbarte Positionsmarkierungen der zweiten Inkrementalspur (41.2) in einem Abstand (d2) zueinander angeordnet sind, welcher grösser als der Abstand (d1) zwischen zwei benachbarten Positionsmarkierungen der ersten Inkrementalspur (41.1) ist.

4. Lineare Wegmessvorrichtung (20) gemäss einem der Ansprüche- 1-3, wobei
die Absolutspur (45) des einen der Schienensegmente (30a) eine erste Kodierung (46) umfasst, welche eine Information über mindestens einen charakteristischen Parameter mindestens eines der anderen der Schienensegmente (30b) der linearen Schiene (30) enthält, und die erste Kodierung (46) mittels des dritten Sensors (51.3) detektierbar ist.

5. Lineare Wegmessvorrichtung (10) gemäss Anspruch 4, wobei der mindestens eine charakteristische Parameter ist:
eine Baugrösse mindestens eines der anderen der Schienensegmente (30b) oder ein Abstand (d2) zwischen zwei benachbarten Positionsmarkierungen der zweiten Inkrementalspur (41.2).

6. Lineare Wegmessvorrichtung (10) gemäss einem der Ansprüche 1-5, wobei
die lineare Schiene (30) aus mehr als zwei der Schienensegmente (30a, 30b) zusammengesetzt ist und
alle Schienensegmente (30b) - mit Ausnahme des einen der Schienensegmente (30a), welches die Absolutspur (45) aufweist - identisch ausgebildet sind.

7. Lineare Wegmessvorrichtung (10) gemäss Anspruch 6, wobei die Schienensegmente (30a, 30b) in beliebiger Reihenfolge hintereinander montierbar sind, um die lineare Schiene (30) zu bilden.

8. Lineare Wegmessvorrichtung (10) gemäss Anspruch 6 oder7, wobei jedes der Schienensegmente (30b) - mit Ausnahme des einen der Schienensegmente (30a), welches die Absolutspur (45) aufweist - gegen ein identisches Schienensegment austauschbar ist.

9. Linearführung (1), welche einen bewegbaren Körper (20) und eine lineare Wegmessvorrichtung (10) nach einem der Ansprüche 1 - 8 umfasst,
wobei der bewegbare Körper (20) über Wälzkörper an der linearen Schiene (30) der linearen Wegmessvorrichtung (10) gestützt ist, sodass die Wälzkörper eine geführte lineare Bewegung des bewegbaren Körpers (20) in Längsrichtung der linearen Schiene (30) ermöglichen, und
die Abtasteinrichtung (50) der linearen Wegmessvorrichtung (10) am bewegbaren Körper (20) angeordnet ist.

## Claims

1. A linear displacement measuring device (10) for determining an absolute position, comprising:
a) a linear rail (30) which has a longitudinal axis (31) and is composed of a plurality of individual rail segments (30a, 30b), which rail segments are arranged one behind the other in the direction of said longitudinal axis (31),
wherein each of the rail segments (30a, 30b) has a material measure (40a, 40b) which comprises at least one first incremental track (41.1) extending in the direction of the longitudinal axis (31) and having a plurality of equidistantly arranged position markings, and wherein the material measure (40a) of one of the rail segments (30a) has an absolute track (45) located next to the first incremental track (41.1) of this material measure (40a) and having a plurality of position markings for coding a plurality of predetermined absolute positions which lie one behind the other in the direction of the longitudinal axis (31);
b) a scanning device (50) with a sensor arrangement (51) for scanning the material measures (40a, 40b), which sensor arrangement comprises at least a first sensor (51.1), a second sensor (51.2) and a third sensor (51.3),
wherein the scanning device (50) is guided with respect to the rail (30) in such a manner that it is movable in the direction of the longitudinal axis (31) along a plurality of the rail segments (30a, 30b), and
wherein the first sensor (51.1) is configured to detect at least one position marking of the first incremental track (41.1) of one of the rail segments (30a, 30b) and to generate a first signal (S1) containing information about a position of the scanning device (50) relative to the at least one position marking detected by the first sensor (51.1),
wherein the second sensor (51.2) is configured to detect at least one position marking of the first incremental track (41.1) of one of the rail segments (30a, 30b) and to generate a second signal (S2) containing information about a position of the scanning device (50) relative to the at least one position marking detected by the second sensor (51.2),
wherein the first sensor (51.1) and the second sensor (51.2) are arranged offset relative to one another by a predetermined distance (D) in the direction of the longitudinal axis (31), so that the scanning device (50) is enabled to be brought into a position (P1) with respect to in each case two adjacent rail segments (30a, 30b), in which position the first sensor (51.1) detects at least one of the position markings of the first incremental track (41.1) of the material measure (40a) of the one of the two adjacent rail segments (30a), and the second sensor (51.2) detects at least one of the position markings of the first incremental track (41.1) of the material measure (40b) of the other one of the two adjacent rail segments (30b),
wherein the third sensor (51.3) is configured to scan the absolute track (45) of the material measure (40a) of the one of the rail segments (30a) and to generate a third signal (S3) containing information about a position of the scanning device (50) relative to the predetermined absolute positions;
c) a first evaluation device (60) for the third signal (S3), which is configured to detect whether the scanning device (50) is located at one of the predetermined absolute positions regarding the one of the rail segments (30a), and - if an evaluation of the third signal (S3) shows that the scanning device (50) is located at one of the predetermined absolute positions (P1) with respect to one of the rail segments (30a) at a first time, - to determine a first absolute value (AW1) which represents this one of the predetermined absolute positions (P1);
d) a second evaluation device (65) for the first signal (S1) and the second signal (S2), which is configured to evaluate, after the first time, the first signal and the second signal during a first time interval between the first time and a second time and to determine a position difference (PD) between the position (P1) of the scanning device (50) at the beginning of the first time interval and a position (P2) of the scanning device (50) at the second time at the end of the first time interval;
e) a computing unit (70) which is configured to calculate, from the first absolute value (AW1) and the position difference (PD) determined by the second evaluation device (65), a second absolute value (AW2) which represents an absolute position of the scanning device (50) at the second time at the end of the first time interval,
wherein the material measure (40b) of at least one of the rail segments (30b) - with the exception of the one of the rail segments (30a) which has the absolute track (45) - comprises a second incremental track (41.2) which extends next to the first incremental track (41.1) of this at least one of the rail segments (30b) in the direction of the longitudinal axis (31) and has a plurality of equidistantly arranged position markings, and
the second incremental track (41.2) is arranged relative to the third sensor (51.3) of the scanning device (50) such that the second incremental track (41.2) is enabled to be scanned by means of the third sensor (51.3) and the position markings of the second incremental track (41.2) are enabled to be detected by means of the third sensor (51.3), and
the third sensor (51.3) is configured to generate a fourth signal (S4) when scanning the second incremental track (41.2), and
the computing unit (70) is configured to compare the fourth signal (S4) with the first signal (S1) and/or the second signal (S2).

2. The linear displacement measuring device (10) according to claim 1,
wherein the scanning device (50), the first evaluation device (60), the second evaluation device (65) and/or the computing unit (70) are configured to be operated by means of a supply of electrical energy, and an electrical energy supply device (80) is present which is configured to enable an uninterrupted supply of electrical energy to the scanning device, the first evaluation device, the second evaluation device and/or the computing unit after the first time.

3. The linear displacement measuring device (10) according to claim 1 or 2,
wherein two adjacent position markings of the second incremental track (41.2) are arranged at a distance (d2) from each other which is greater than the distance (d1) between two adjacent position markings of the first incremental track (41.1).

4. The linear displacement measuring device (20) according to any one of claims 1 - 3, wherein
the absolute track (45) of the one of the rail segments (30a) comprises a first coding (46) which contains information about at least one characteristic parameter of at least one of the other ones of the rail segments (30b) of the linear rail (30), and the first coding (46) is detectable by means of the third sensor (51.3).

5. The linear displacement measuring device (10) according to claim 4, wherein the at least one characteristic parameter is:
a size of at least one of the other ones of the rail segments (30b) or a distance (d2) between two adjacent position markings of the second incremental track (41.2).

6. The linear displacement measuring device (10) according to any one of claims 1 - 5, wherein
the linear rail (30) is composed of more than two of the rail segments (30a, 30b) and
all rail segments (30b) - with the exception of the one of the rail segments (30a) which has the absolute track (45) - are formed to be identical.

7. The linear displacement measuring device (10) according to claim 6, wherein the rail segments (30a, 30b) are configured to be mounted in any order one behind the other to form the linear rail (30).

8. The linear displacement measuring device (10) according to claim 6 or 7, wherein each of the rail segments (30b) - with the exception of the one of the rail segments (30a) which has the absolute track (45) - is interchangeable with an identical rail segment.

9. A linear guide (1), comprising a movable body (20) and a linear displacement measuring device (10) according to any one of claims 1 - 8,
wherein the movable body (20) is supported on the linear rail (30) of the linear displacement measuring device (10) via rolling elements, so that the rolling elements enable a guided linear movement of the movable body (20) in the longitudinal direction of the linear rail (30), and
the scanning device (50) of the linear displacement measuring device (10) is arranged on the movable body (20) .

## Revendications

1. Dispositif de mesure de déplacement linéaire (10) pour déterminer une position absolue, lequel comprend :
a) un rail linéaire (30), lequel comporte un axe longitudinal (31) et est composé de plusieurs segments de rail (30a, 30b) individuels, lesquels segments de rail sont disposés les uns derrière les autres en direction de l'axe longitudinal (31),
sachant que chacun des segments de rail (30a, 30b) comporte une mesure matérialisée (40a, 40b), laquelle comprend au moins une première piste incrémentale (41.1) s'étendant en direction de l'axe longitudinal (31) avec une pluralité de repères de position disposés de façon équidistante et sachant que la mesure matérialisée (40a) d'un des segments de rail (30a) comporte en plus de la première piste incrémentale (41.1) de cette mesure matérialisée (40a) une piste absolue (45) avec une pluralité de repères de position à des fins de codification de plusieurs positions absolues prédéfinies, lesquels se situent les uns derrière les autres en direction de l'axe longitudinal (31),
b) un dispositif de balayage (50) avec un système de détection (51) pour balayer les mesures matérialisées (40a, 40b), lequel système de détection comprend au moins un premier capteur (51.1), un deuxième capteur (51.2) et un troisième capteur (51.3),
sachant que le dispositif de balayage (50) est guidé eu égard au rail (30) de telle manière qu'il est mobile en direction de l'axe longitudinal (31) le long de plusieurs des segments de rail (30a, 30b), et
sachant que le premier capteur (51.1) est constitué pour détecter au moins un repère de position de la première piste incrémentale (41.1) d'un des segments de rail (30a, 30b) et produire un premier signal (S1), lequel contient une information sur une position du dispositif de balayage (50) par rapport à au moins un repère de position détecté par le premier capteur (51.1), sachant que le deuxième capteur (51.2) est constitué pour détecter au moins un repère de position de la première piste incrémentale (41.1) d'un des segments de rail (30a, 30b) et produire un deuxième signal (S2), lequel contient une information sur une position du dispositif de balayage (50) par rapport à au moins un repère de position détecté par le deuxième capteur (51.2), sachant que le premier capteur (51.1) et le deuxième capteur (51.2) sont disposés déportés l'un par rapport à l'autre d'une distance prédéterminée (D)en direction de l'axe longitudinal (31) de telle manière que le dispositif de balayage (50) concernant respectivement deux segments de rail (30a, 30b) voisins peut être placé dans une position (P1) dans laquelle le premier capteur (51.1) détecte au moins un des repères de position de la première piste incrémentale (41.1) de la mesure matérialisée (40a) d'un des deux segments de rail (30a) voisins et le deuxième capteur (51.2) détecte au moins un des repères de position de la première piste incrémentale (41.1) de la mesure matérialisée (40b) de l'autre des deux segments de rail (30b) voisins,
sachant que le troisième capteur (51.3) est constitué pour balayer la piste absolue (45) de la mesure matérialisée (40a) d'un des segments de rail (30a) et produire un troisième signal (S3), lequel contient une information sur une position du dispositif de balayage (50) par rapport aux positions absolues prédéfinies,
c) un premier système d'évaluation (60) pour le troisième signal (S3), lequel est constitué pour détecter, si le dispositif de balayage (50) se trouve sur une des positions absolues prédéfinies eu égard à un des segments de rail (30a), et, au cas où il en résulte une évaluation du troisième signal (S3), que le dispositif de balayage (50) se trouve à un premier moment à une des positions absolues prédéfinies (P1) concernant un des segments de rail (30a), pour déterminer une première valeur absolue (AW1), laquelle représente une des positions (P1) absolues prédéfinies,
d) un deuxième système d'évaluation (65) pour le premier signal (S1) et le deuxième signal (S2), lequel est constitué pour évaluer après le premier moment, le premier signal et le deuxième signal pendant un premier intervalle de temps entre le premier moment et un deuxième moment et pour déterminer une différence de position (PD) entre la position (P1) du dispositif de balayage (50) au début du premier intervalle de temps et une position (P2) du dispositif de balayage (50) au deuxième moment à la fin du premier intervalle de temps,
e) une unité de calcul (70), laquelle est constituée pour calculer à partir de la première valeur absolue (AW1) et de la différence de position (PD) déterminée par le deuxième système d'évaluation (65), une deuxième valeur absolue (AW2), laquelle représente une position absolue du dispositif de balayage (50) au deuxième moment à la fin du premier intervalle de temps,
sachant que la mesure matérialisée (40b) d'au moins un des segments de rail (30b) comprend, à l'exception d'un des segments de rail (30a), lequel comporte la piste absolue (45), une deuxième piste incrémentale (41.2), laquelle s'étend en direction de l'axe longitudinal (31) en plus de la première piste incrémentale (41.1) d'au moins un des segments de rail (30b) et comporte une pluralité de repères de position disposés de façon équidistante, et
la deuxième piste incrémentale (41.2) est disposée par rapport au troisième capteur (51.3) du dispositif de balayage (50) de telle manière que la deuxième piste incrémentale (41.2) peut être balayée au moyen du troisième capteur (51.3) et les repères de position de la deuxième piste incrémentale (41.2) peuvent être détectés au moyen du troisième capteur (51.3), et
le troisième capteur (51.3) est constitué pour produire un quatrième signal (S4) lors du balayage de la deuxième piste incrémentale (41.2), et
l'unité de calcul (70) est constituée pour comparer le quatrième signal (S4) au premier signal (S1) et/ou au deuxième signal (S2).

2. Dispositif de mesure de déplacement linéaire (10) selon la revendication 1, sachant que le dispositif de balayage (50), le premier système d'évaluation (60), le deuxième système d'évaluation (65) et/ou l'unité de calcul (70) peuvent être utilisés au moyen d'une alimentation en énergie électrique et qu'un système d'alimentation en énergie électrique (80) est présent, lequel est constitué pour permettre après le premier moment, un apport ininterrompu d'énergie électrique au dispositif de balayage, au premier système d'évaluation, au deuxième système d'évaluation et/ou à l'unité de calcul.

3. Dispositif de mesure de déplacement linéaire (10) selon la revendication 1 ou 2, sachant que deux repères de position voisins de la deuxième piste incrémentale
sont disposés à une distance (d2) l'un de l'autre, laquelle est plus grande que la distance (d1) entre deux repères de position voisins de la première piste incrémentale (41.1).

4. Dispositif de mesure de déplacement linéaire (20) selon l'une quelconque des revendications 1 - 3, sachant que la piste absolue (45) d'un des segments de rail (30a) comprend une première codification (46), laquelle contient une information sur au moins un paramètre caractéristique d'au moins un des autres segments de rail (30b) du rail linéaire (30) et la première codification (46) peut être détectée au moyen du troisième capteur (51.3).

5. Dispositif de mesure de déplacement linéaire (10) selon la revendication 4, sachant qu'au moins un paramètre caractéristique est :
une taille d'au moins un des autres segments de rail (30b) ou une distance (d2) entre deux repères de position voisins de la deuxième piste incrémentale (41.2).

6. Dispositif de mesure de déplacement linéaire (10) selon l'une quelconque des revendications 1 - 5, sachant que le rail linéaire (30) est composé de plus de deux segments de rail (30a, 30b) et tous les segments de rail (30b) sont constitués de façon identique, à l'exception d'un des segments de rail (30a), lequel comporte la piste absolue (45).

7. Dispositif de mesure de déplacement linéaire (10) selon la revendication 6, sachant que les segments de rail (30a, 30b) peuvent être montés les uns derrière les autres dans un ordre quelconque pour former le rail linéaire (30).

8. Dispositif de mesure de déplacement linéaire (10) selon la revendication 6 ou 7, sachant que chacun des segments de rail (30b) peut être échangé contre un segment de rail identique, à l'exception d'un des segments de rail (30a), lequel comporte la piste absolue (45).

9. Guidage linéaire (1), lequel comprend un corps mobile (20) et un dispositif de mesure de déplacement linéaire (10) selon l'une quelconque des revendications 1 - 8, sachant que le corps mobile (20) est soutenu par le biais des corps de roulement sur le rail linéaire (30) du dispositif de mesure de déplacement linéaire (10) de telle manière que les corps de roulement permettent un mouvement linéaire guidé du corps mobile (20) en direction longitudinale du rail linéaire (30) et le dispositif de balayage (50) du dispositif de mesure de déplacement linéaire (10) est disposé sur le corps mobile (20).
